(19) Europäisches Patentamt
European Patent Office
Office européen des brevets

(11) **EP 4 622 131 A1**

(12) **EUROPEAN PATENT APPLICATION**
published in accordance with Art. 153(4) EPC

(43) Date of publication:
**24.09.2025 Bulletin 2025/39**

(21) Application number: **23910095.1**

(22) Date of filing: **12.12.2023**

(51) International Patent Classification (IPC):
**H04B 7/06** (2006.01)

(52) Cooperative Patent Classification (CPC):
**H04B 7/06; H04B 17/309; H04W 24/08**

(86) International application number:
**PCT/CN2023/138120**

(87) International publication number:
**WO 2024/140165 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211694232**

(71) Applicant: **Huawei Technologies Co., Ltd.
Shenzhen, Guangdong 518129 (CN)**

(72) Inventors:
• **LI, Wenjun
Shenzhen, Guangdong 518129 (CN)**
• **RUAN, Wei
Shenzhen, Guangdong 518129 (CN)**
• **WANG, Shuqi
Shenzhen, Guangdong 518129 (CN)**
• **YIN, Bo
Shenzhen, Guangdong 518129 (CN)**
• **XIE, Jiquan
Shenzhen, Guangdong 518129 (CN)**

(74) Representative: **Gill Jennings & Every LLP
The Broadgate Tower
20 Primrose Street
London EC2A 2ES (GB)**

(54) **ANTENNA PAIRING METHOD AND APPARATUS**

(57) An antenna pairing method and an apparatus are provided, applied to a wireless local area network system supporting 802.11 series protocols such as a next-generation Wi-Fi protocol of IEEE 802.11ax like 802.11be, Wi-Fi 7, or EHT, a next generation of 802.11 be like Wi-Fi 8 or UHR, or Wi-Fi AI, and further applied to an ultra-wideband-based wireless personal local area network system, a sensing system, and the like. A first communication apparatus may send a measurement frame. After receiving the measurement frame, a second communication apparatus obtains, based on the measurement frame, channel information of an antenna combination corresponding to the measurement frame (or a measurement element in the measurement frame). Therefore, the second communication apparatus may send a feedback frame based on the channel information. After receiving the feedback frame, the first communication apparatus may learn of an antenna pairing result based on the feedback frame, and perform communication based on the antenna pairing result. This effectively reduces an increase in system overheads.

FIG. 4

EP 4 622 131 A1

## Description

This application claims priority to Chinese Patent Application No. 202211694232.2, filed with the China National Intellectual Property Administration on December 28, 2022 and entitled "ANTENNA PAIRING METHOD AND APPARATUS", which is incorporated herein by reference in its entirety.

## TECHNICAL FIELD

This application relates to the field of communication technologies, and in particular, to an antenna pairing method and an apparatus.

## BACKGROUND

With development of Wi-Fi technologies, more Wi-Fi devices support smart antennas, and the devices support more antenna combinations. In a scenario in which both communication parties support smart antennas, selecting a best antenna pairing combination is complex.

Currently, in smart antenna selection solutions of most vendors, a probe packet is sent for all optional antenna modes of each user, and an antenna combination with a minimum PER is selected, as a best antenna combination for each user, by separately collecting statistics on a packet error ratio (packet error ratio, PER) of each antenna combination of each user.

However, as an antenna combination number M and a communication user number N increase, system overheads are higher.

## SUMMARY

This application provides an antenna pairing method and an apparatus, to effectively reduce a degree to which system overheads increase as an antenna combination number M and a user number N increase.

According to a first aspect, an embodiment of this application provides an antenna pairing method, where the method includes:

A first communication apparatus sends a measurement frame. A measurement element number in the measurement frame or a measurement frame number is determined based on information about a transmit antenna combination in the first communication apparatus and information about a receive antenna combination in a second communication apparatus. The first communication apparatus receives a feedback frame of the measurement frame. The feedback frame is used to feed back an antenna pairing result between the first communication apparatus and the second communication apparatus.

In this embodiment of this application, the first communication apparatus sends the measurement frame, so that the second communication apparatus can determine the antenna pairing result between the two communication parties based on the measurement frame. Therefore, after obtaining the antenna pairing result, the first communication apparatus performs communication based on the antenna pairing result. Because the antenna pairing result is a better antenna pairing combination between the two communication parties, communication based on the antenna combination indicated by the antenna pairing result can effectively improve efficiency of the communication between the two communication parties. In addition, antenna pairing is performed based on the measurement frame shown in this embodiment of this application, so that an increase in system overheads can be effectively reduced.

For example, for a current solution of sending a probe packet, air interface overheads may be understood as an O (N*M) magnitude, and memory overheads may be understood as an O (N*M) magnitude. As a result, system overheads of the solution for sending the probe packet increase rapidly as M and N increase. However, in this embodiment of this application, the first communication apparatus sends the measurement frame, so that the second communication apparatus determines the antenna pairing result. In addition, air interface overheads occupied by the measurement frame are far less than the air interface overheads of the probe packet. Therefore, even if M and N increase, the system overheads are not excessively high.

In a possible implementation, the information about the transmit antenna combination includes a transmit antenna combination number or index, and the information about the receive antenna combination includes a receive antenna combination number or index.

In a possible implementation, the measurement frame number or the measurement element number in the measurement frame is equal to a product of the transmit antenna combination number in the first communication apparatus and a largest receive antenna combination number in a plurality of second communication apparatuses.

In a possible implementation, the method further includes: The first communication apparatus sends a measurement announcement frame. The measurement announcement frame includes at least one of the following information: the transmit antenna combination number or index, the receive antenna combination number or index, and a paired antenna combination number in the antenna pairing result.

In a possible implementation, the measurement announcement frame further includes at least one piece of the following information: an identifier of the second communication apparatus that performs antenna measurement and a number of second communication apparatuses.

In a possible implementation, the measurement frame includes a null data packet (null data packet, NDP) frame, and the NDP frame includes at least one of the following: information identifying that the NDP frame is used for antenna measurement, and a transmit antenna combination identifier corresponding to the NDP frame. Alternatively, the measurement frame includes a physical layer protocol data unit (physical layer protocol data unit, PPDU), and a measurement element includes a training field in the PPDU.

It may be understood that the NDP frame shown in this embodiment of this application may also be referred to as an NDP for short.

In a possible implementation, that the first communication apparatus sends a measurement announcement frame includes: sending the measurement announcement frame when the first communication apparatus supports an antenna pairing capability and the second communication apparatus supports an antenna pairing capability.

In a possible implementation, the method further includes: The first communication apparatus sends first capability information. The first capability information indicates the antenna pairing capability of the first communication apparatus, and the first capability information includes at least one of the following: whether the first communication apparatus supports the antenna pairing capability, the transmit antenna combination number or index in the first communication apparatus, and time at which the first communication apparatus switches the transmit antenna combination. The first communication apparatus receives second capability information. The second capability information indicates the antenna pairing capability of the second communication apparatus, and the second capability information includes at least one of the following: whether the second communication apparatus supports the antenna pairing capability, the receive antenna combination number or index in the second communication apparatus, and time at which the second communication apparatus switches the receive antenna combination.

In a possible implementation, before that the first communication apparatus receives a feedback frame of the measurement frame, the method further includes: The first communication apparatus sends a trigger frame. The trigger frame is used to trigger the second communication apparatus to send the feedback frame.

In a possible implementation, after that the first communication apparatus receives a feedback frame of the measurement frame, the method further includes: The first communication apparatus sends a multi-user request to send (multi-user request to send, MU-RTS) frame to the second communication apparatus, where the MU-RTS frame indicates a first receive antenna combination to which the second communication apparatus is to switch; and

receives a clear to send (clear to send, CTS) frame (also referred to as a clear to send frame), and switches to a first transmit antenna combination corresponding to the antenna pairing result; and

sends an aggregated protocol data unit based on the first transmit antenna combination, receives a block acknowledgment (block acknowledgment, BA) frame of the aggregated protocol data unit, and determines a pairing result between the first receive antenna combination and the first transmit antenna combination based on a packet error rate of the BA frame.

In a possible implementation, the method further includes: communicating with the second communication apparatus based on the antenna pairing result that is fed back via the feedback frame and that corresponds to the second communication apparatus.

According to a second aspect, an embodiment of this application provides an antenna pairing method, where the method includes:

A second communication apparatus receives a measurement frame. A measurement element number in the measurement frame or a measurement frame number is determined based on information about a transmit antenna combination in a first communication apparatus and information about a receive antenna combination in the second communication apparatus. The second communication apparatus sends a feedback frame of the measurement frame. The feedback frame is used to feed back an antenna pairing result between the first communication apparatus and the second communication apparatus.

In a possible implementation, the information about the transmit antenna combination includes a transmit antenna combination number or index, and the information about the receive antenna combination includes a receive antenna combination number or index.

In a possible implementation, the measurement frame number or the measurement element number in the measurement frame is equal to a product of the transmit antenna combination number in the first communication apparatus and a largest receive antenna combination number in a plurality of second communication apparatuses.

In a possible implementation, before that a second communication apparatus receives a measurement frame, the method further includes:

The second communication apparatus receives a measurement announcement frame. The measurement announcement frame includes at least one of the following information: the transmit antenna combination number or index, the receive antenna combination number or index, and a paired antenna combination number in the antenna pairing result.

In a possible implementation, the measurement announcement frame further includes at least one piece of the following information: an identifier of the second communication apparatus that performs antenna measurement and a number of second communication apparatuses.

In a possible implementation, that a second communication apparatus receives a measurement frame includes: The second communication apparatus sequentially switches the receive antenna combinations based on the measurement announcement frame and a switching sequence, and receives the measurement frame based on the switched receive antenna combinations.

In a possible implementation, information about the switching sequence is included in the measurement announcement frame; or the information about the switching sequence is defined by a standard.

In a possible implementation, the measurement frame includes an NDP frame, and the NDP frame includes at least one of the following: information identifying that the NDP frame is used for antenna measurement, and a transmit antenna combination identifier corresponding to the NDP frame. Alternatively, the measurement frame includes a physical layer protocol data unit PPDU, and a measurement element includes a training field in the PPDU.

In a possible implementation, before the sending a feedback frame of the measurement frame, the method further includes:

determining a plurality of pieces of channel information based on a transmit antenna combination and a receive antenna combination that correspond to the measurement frame; determining target channel information in the plurality of pieces of channel information by using an artificial intelligence (artificial intelligence, AI) algorithm, and determining the antenna pairing result based on the target channel information, where an input of the AI algorithm includes the plurality of pieces of channel information, and an output of the AI algorithm includes the target channel information; and generating the feedback frame based on the antenna pairing result.

In a possible implementation, before that the second communication apparatus sends a feedback frame of the measurement frame, the method further includes: The second communication apparatus receives a trigger frame. The trigger frame is used to trigger the second communication apparatus to send the feedback frame.

In a possible implementation, after that the second communication apparatus sends a feedback frame of the measurement frame, the method further includes: The second communication apparatus receives a multi-user request to send MU-RTS frame, where the MU-RTS frame indicates a first receive antenna combination to which the second communication apparatus is to switch; sends a CTS frame, and switches to the first receive antenna combination; and sends an aggregated protocol data unit based on the first receive antenna combination, and sends a block acknowledgment BA frame of the aggregated protocol data unit.

In a possible implementation, the feedback frame includes at least one piece of the following information: a transmit antenna combination index in the antenna pairing result, a receive antenna combination index in the antenna pairing result, and a pairing probability of the antenna pairing result.

In a possible implementation, the method further includes: communicating with the first communication apparatus based on the antenna pairing result that is fed back via the feedback frame and that corresponds to the first communication apparatus.

According to a third aspect, an embodiment of this application provides a communication apparatus, configured to perform the method according to any one of the first aspect or the possible implementations of the first aspect. The communication apparatus includes units that perform the method according to any one of the first aspect or the possible implementations of the first aspect. For example, the communication apparatus may include a processing unit and a transceiver unit.

According to a fourth aspect, an embodiment of this application provides a communication apparatus, configured to perform the method according to any one of the second aspect or the possible implementations of the second aspect. The communication apparatus includes units that perform the method according to any one of the second aspect or the possible implementations of the second aspect. For example, the communication apparatus may include a processing unit and a transceiver unit.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may be further integrated into one component, that is, the processor and the memory may be further integrated together.

In a possible implementation, the communication apparatus further includes a transceiver. The transceiver is configured to receive a signal and/or send a signal.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may be further integrated into one component, that is, the processor and the memory may be further integrated together.

In a possible implementation, the communication apparatus further includes a transceiver. The transceiver is configured to receive a signal and/or send a signal.

According to a seventh aspect, an embodiment of this application provides a communication apparatus. The communication apparatus includes a logic circuit and an interface; the logic circuit is coupled to the interface; and the interface is configured to: output a measurement frame, and input a feedback frame.

For example, the logic circuit is configured to determine the measurement frame. For example, the logic circuit is further configured to parse the input feedback frame to obtain an antenna pairing result.

In a possible implementation, the logic circuit is further configured to: output an association request frame in an vacant slot indicated by an vacant slot information field, and parse an association response frame input through the interface.

In a possible implementation, the interface is further configured to output a measurement announcement frame.

In a possible implementation, the interface is further configured to output first capability information, and input second capability information.

In a possible implementation, the interface is further configured to output a trigger frame.

In a possible implementation, the interface is further configured to: output an MU-RTS frame, and input a CTS frame. The logic circuit is further configured to switch a transmit antenna combination in a first communication apparatus to a first transmit antenna combination. The interface is further configured to: output an aggregated protocol data unit, and input a BA frame. The logic circuit is further configured to determine a pairing result between a first receive antenna combination and the first transmit antenna combination based on the BA frame.

In a possible implementation, the logic circuit is further configured to communicate with the second communication apparatus based on the antenna pairing result.

It may be understood that for descriptions of the logic circuit and the interface, refer to the first aspect. Details are not described herein again.

According to an eighth aspect, an embodiment of this application provides a communication apparatus. The communication apparatus includes a logic circuit and an interface; the logic circuit is coupled to the interface; and the interface is configured to: input a measurement frame, and output a feedback frame.

For example, the logic circuit is further configured to parse the input measurement frame. For example, the logic circuit is further configured to determine the feedback frame.

In a possible implementation, the interface is further configured to input a measurement announcement frame.

In a possible implementation, the logic circuit is further configured to: determine a plurality of pieces of channel information based on a transmit antenna combination and a receive antenna combination that correspond to the measurement frame; determine target channel information in the plurality of pieces of channel information by using an artificial intelligence algorithm, and determine an antenna pairing result based on the target channel information; and generate the feedback frame based on the antenna pairing result.

In a possible implementation, the interface is further configured to input a trigger frame.

For example, the logic circuit is further configured to parse the trigger frame.

In a possible implementation, the interface is further configured to: input an MU-RTS frame, and output a CTS frame. The logic circuit is further configured to: switch a receive antenna combination in a second communication apparatus to a first receive antenna combination, and output a BA frame based on a first received aggregated protocol data unit.

It may be understood that for descriptions of the logic circuit and the interface, refer to the second aspect. Details are not described herein again.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is enabled to be performed.

According to a tenth aspect, an embodiment of this application provides a computer-readable storage medium. The computer-readable storage medium is configured to store a computer program. When the computer program is run on a computer, the method according to any one of the second aspect or the possible implementations of the second aspect is enabled to be performed.

According to an eleventh aspect, an embodiment of this application provides a computer program product. The computer program product includes a computer program. When the computer program product runs on a computer, the method according to any one of the first aspect or the possible implementations of the first aspect is enabled to be performed.

According to a twelfth aspect, an embodiment of this application provides a computer program product. The computer program product includes a computer program. When the computer program product runs on a computer, the method according to any one of the second aspect or the possible implementations of the second aspect is enabled to be performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a communication system. The wireless communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

## BRIEF DESCRIPTION OF DRAWINGS

FIG. 1 is a diagram of an architecture of a communication system according to an embodiment of this application;
FIG. 2 is a diagram of an architecture of a communication system according to an embodiment of this application;
FIG. 3a is a diagram of an antenna combination according to an embodiment of this application;
FIG. 3b is a diagram of an antenna combination according to an embodiment of this application;
FIG. 3c is a diagram of performing communication by using a best antenna mode pairing combination according to an embodiment of this application;
FIG. 4 is a schematic flowchart of an antenna pairing method according to an embodiment of this application;
FIG. 5a is a diagram of a format of a smart antenna capability information element according to an embodiment of this application;
FIG. 5b is a diagram of a format of a measurement announcement frame according to an embodiment of this application;
FIG. 6a is a diagram of a format of a feedback frame according to an embodiment of this application;
FIG. 6b is a diagram of determining target channel information according to an embodiment of this application;
FIG. 6c is a diagram of sending a feedback frame based on a trigger frame according to an embodiment of this application;
FIG. 6d is a diagram of a format of a trigger frame according to an embodiment of this application;
FIG. 7a is a diagram of a switching sequence according to an embodiment of this application;
FIG. 7b is a diagram of a switching sequence according to an embodiment of this application;
FIG. 7c is a diagram of a format of an NDP frame according to an embodiment of this application;
FIG. 7d is a diagram of a format of an NDP frame according to an embodiment of this application;
FIG. 8a is a diagram of a switching sequence according to an embodiment of this application;
FIG. 8b is a diagram of a switching sequence according to an embodiment of this application;
FIG. 8c is a diagram of a format of a PPDU according to an embodiment of this application;
FIG. 8d is a diagram of a format of a PPDU according to an embodiment of this application;
FIG. 9a is a diagram of antenna pairing supplementary probing according to an embodiment of this application;
FIG. 9b is a diagram of a format of an MU-RTS frame according to an embodiment of this application;
FIG. 9c is a diagram of a format of a best antenna pairing announcement according to an embodiment of this application;
FIG. 9d is a diagram of a communication method according to an embodiment of this application;
FIG. 10 is a diagram of a structure of a communication apparatus according to an embodiment of this application;

FIG. 11 is a diagram of a structure of a communication apparatus according to an embodiment of this application; and

FIG. 12 is a diagram of a structure of a communication apparatus according to an embodiment of this application.

## DESCRIPTION OF EMBODIMENTS

For ease of understanding technical solutions in this application, the following further describes this application with reference to accompanying drawings.

In the specification, the claims, and the accompanying drawings of this application, the terms "first", "second", and the like are merely intended to distinguish between different objects but do not indicate a particular order. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to the embodiment may be included in at least one embodiment of this application. The phrase appear at various locations in this specification may neither necessarily mean a same embodiment, nor mean an independent or optional embodiment exclusive from another embodiment. A person skilled in the art may understand, in explicit and implicit manners, that an embodiment described in this application may be combined with another embodiment.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. "Or" indicates that two relationships may exist, for example, only A exists and only B exists; and when A and B are not mutually exclusive, indicates that three relationships may exist, for example, only A exists, only B exists, and both A and B exist. The character "/" generally indicates an "or" relationship between the associated objects. "At least one of the following items (pieces)" or a similar expression thereof refers to any combination of these items. For example, at least one (piece) of a, b, or c may represent: a, b, c, "a and b", "a and c", "b and c", or "a, b, and c".

The technical solutions provided in this application may be applied to a WLAN system like Wi-Fi. For example, the method provided in this application is applicable to IEEE 802.11 series protocols such as an 802.11a/b/g protocol, an 802.11n protocol, an 802.11ac protocol, an 802.11ax protocol, an 802.11be protocol, or a next-generation protocol. Examples are not enumerated herein. The technical solutions provided in this application may be further applied to a wireless personal area network (wireless personal area network, WPAN) based on a UWB technology. For example, the method provided in this application is applicable to IEEE 802.15 series protocols such as an 802.15.4a protocol, an 802.15.4z protocol, an 802.15.4ab protocol, or a future generation of UWB WPAN protocol. Examples are not enumerated herein. The technical solutions provided in this application may be further applied to various other communication systems, for example, an internet of things (internet of things, IoT) system, a vehicle to everything (vehicle to everything, V2X) system, and a narrowband internet of things (narrowband internet of things, NB-IoT) system, may be applied to a device in the internet of vehicles, an internet of things node, a sensor, and the like in the internet of things (internet of things, IoT), a smart camera, a smart remote control, and a smart water/electricity meter in a smart home, a sensor in a smart city, and the like, or is further applicable to a long term evolution (long term evolution, LTE) system, a 5th generation (5th generation, 5G) communication system, a new communication system emerging in future communication development, and the like.

Although embodiments of this application mainly use a WLAN as an example for description, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT), it is easy for a person skilled in the art to understand that the various aspects in this application may be extended to other networks using various standards or protocols, for example, Bluetooth (Bluetooth), a high performance radio LAN (high performance radio LAN, HIPERLAN) (a wireless standard similar to the IEEE 802.11 standard, mainly used in Europe), a wide area network (WAN), or another network known or developed in the future. Therefore, regardless of used coverage and a used wireless access protocol, various aspects provided in this application can be applicable to any appropriate wireless network.

The method provided in this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, has a function of communicating or sensing with another device (for example, a station or another access point) in a WLAN network, and certainly, may further have a function of communicating or sensing with another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip or a processing system installed in the entire device. The device in which the chip or the processing system is installed may implement the method and the function in embodiments of this application under control of the chip or the processing system. The AP in embodiments of this application is an apparatus that provides a service for the STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip or a processing system in these devices in various forms, to implement the method and the function in embodiments of this application.

The station is an apparatus having a wireless communication function, supports communication or sensing by using the WLAN protocol, and has a capability of communicating or sensing with another station or the access point in the WLAN network. In the WLAN system, the station may be referred to as a non-access point station (non-access point station, non-AP STA). For example, the STA is any user communication device that allows a user to communicate with or sense an AP and further communicate with a WLAN. The apparatus having the wireless communication function may be an entire device, or may be a chip or processing system installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, or a computer supporting a Wi-Fi communication function.

The WLAN system can provide high-rate and low-latency transmission. With the continuous evolution of WLAN application scenarios, the WLAN system is to be applicable to more scenarios or industries, for example, the internet of things industry, the vehicle-to-everything industry, the banking industry, enterprise office, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, a wearable device like augmented reality (augmented reality, AR) or virtual reality (virtual reality, VR)), a smart device (for example, a printer, a projector, a speaker, or a stereo) in smart office, an internet of vehicles device in the internet of vehicles, an infrastructure (for example, a vending machine, a self-service navigation console of a supermarket, a self-service cashier, or a self-service ordering machine) in a daily life scenario, a device in a large sports and music venue, and the like. For example, the access point and the station each may be a device used in vehicle-to-everything, an internet of things node, a sensor, or the like in the internet of things, a smart camera, a smart remote control, and a smart water/electricity meter in a smart home, a sensor in a smart city, or the like. Specific forms of the STA and the AP are not limited in embodiments of this application, and are merely examples for description herein.

For example, a communication system to which the method provided in this application may be applied may include an access point and a station. For example, this application may be applicable to a scenario of communication or sensing between APs and STAs, between APs, or between STAs in the WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. WLAN communication protocols may be supported between the APs and the STAs, between the APs, or between the STAs. The communication protocols may include the IEEE 802.11 series protocols, for example, the 802.11be standard, and certainly, a standard later than 802.11be.

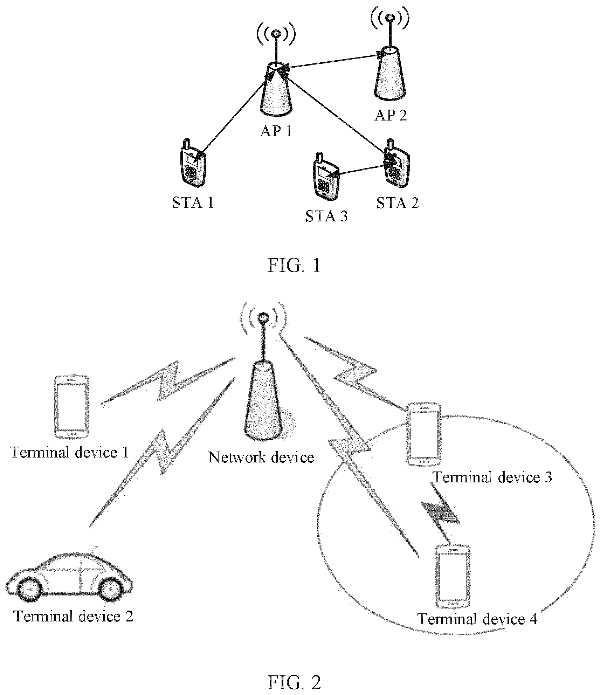

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3. It may be understood that the one or more APs may communicate with the one or more STAs. Certainly, an AP may communicate with an AP, and a STA may communicate with a STA.

It may be understood that, in FIG. 1, an example in which the STA is a mobile phone and the AP is a router is used, and this does not mean that a type of the AP and a type of the STA in this application are limited. Moreover, FIG. 1 shows only two APs and three STAs as an example. However, there may be more or fewer APs or STAs. This is not limited in embodiments of this application.

FIG. 2 is a diagram of an architecture of a communication system according to an embodiment of this application. As shown in FIG. 2, the communication system may include at least one network device and at least one terminal device, for example, a terminal device 1 to a terminal device 4 in FIG. 2. For example, the terminal device 3 and the terminal device 4 shown in FIG. 2 may directly communicate with each other. For example, direct communication between the terminal devices may be implemented by using a D2D technology. For example, the terminal device 1 to the terminal device 4 may separately communicate with the network device. For example, the terminal device 3 and the terminal device 4 may directly communicate with the network device, or may indirectly communicate with the network device, for example, communicate with the network device via another terminal device (not shown in FIG. 2). It should be understood that FIG. 2 shows an example of the one network device and the four terminal devices, and communication links between the communication devices. Optionally, the communication system may include a plurality of network devices, and another number of terminal devices, for example, more or fewer terminal devices, may be included in coverage of each network device. This is not limited in embodiments of this application. The following details the terminal device and the network device.

The terminal device is an apparatus having wireless sending and receiving functions. The terminal device may communicate with an access network device (or may be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or vehicle-mounted device; or may be deployed on the water (for example, a ship). In a possible implementation, the terminal device may be a handheld device having a wireless communication function, a vehicle-mounted device, a wearable device, a sensor, a terminal in an internet of things, a terminal in an internet of vehicles, an uncrewed aerial vehicle device, a terminal device in any form in a 5G network or a future network, or the like. This is not limited in embodiments of this application. It can be understood that the terminal device described in embodiments of this application may include a vehicle (for example, a car) in the internet of vehicles, and may also include a vehicle-mounted device, a vehicle-mounted terminal, or the like in the internet of vehicles. A specific form of the terminal device used in the internet of vehicles is not limited in embodiments of this application. It can be understood that the terminal devices described in embodiments of this application may communicate with each other through D2D, V2X, M2M, or the like. A communication method between the terminal devices is not limited in embodiments of this application.

The network device may be an apparatus that is deployed in the radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having wireless sending and receiving functions, and includes but is not limited to the base station shown above (including a base station deployed on a satellite). Alternatively, the network device may be an apparatus that has a base station function in 6G. Optionally, the network device may be an access node, a wireless relay node, a wireless backhaul node, or the like in a Wi-Fi system. Optionally, the network device may be a radio controller in a cloud radio access network (cloud radio access network, CRAN) scenario. Optionally, the network device may be a wearable device, a vehicle-mounted device, or the like. Optionally, the network device may be a small cell, a transmission reception point (transmission reception point, TRP) (or may be referred to as a transmission point), or the like. It can be understood that the network device may be alternatively a base station, a satellite, or the like in a future evolved public land mobile network (public land mobile network, PLMN). The network device may be alternatively a communication apparatus or the like functioning as a base station in a non-terrestrial communication system, D2D, V2X, or M2M. A specific type of the network device is not limited in embodiments of this application. In systems using different radio access technologies, names of communication apparatuses having functions of network devices may be different, and are not enumerated in embodiments of this application. Optionally, in some deployments of a network device, the network device may include a central unit (central unit, CU), a distributed unit (distributed unit, DU), and the like. In some other deployments of a network device, the CU may be further divided into a CU-control plane (control plane, CP), a CU-user plane (user plane, UP), and the like. In some other deployments of the network device, the network device may alternatively be an antenna unit (radio unit, RU), or the like. In still some other deployments of a network device, the network device may alternatively be an open radio access network (open radio access network, ORAN) architecture or the like. A specific deployment manner of the network device is not limited in embodiments of this application. For example, when the network device is of the ORAN architecture, the network device in embodiments of this application may be an access network device in an ORAN, a module in the access network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. The deployment manner of the network device listed herein is merely an example. With evolution of standard technologies, the network device may have another deployment form. However, any manner in which a frequency band switching method shown in embodiments of this application can be implemented falls within the protection scope of the embodiments of this application.

Network architectures and service scenarios that are described in embodiments of this application are intended to describe the technical solutions in embodiments of this application more clearly, but do not constitute any limitation on the technical solutions provided in embodiments of this application. A person of ordinary skill in the art can know that, as the network architectures evolve and new service scenarios emerge, the technical solutions provided in embodiments of this application are also applicable to similar technical issues.

For a current method for determining an antenna combination by sending a probe packet, as an antenna combination number M in an AP and a communication user number N increase, system overheads correspondingly increase. For example, for air interface overheads, air interface overheads of a probe packet for selecting an antenna mode by each user are of an $O(N*M)$ magnitude. For example, for memory overheads, memory overheads for maintaining each user antenna combination in a device are of an $O(N*M)$ magnitude.

In view of this, embodiments of this application provide the antenna pairing method and an apparatus, to effectively reduce an increase in the system overheads. System overheads of the method provided in embodiments of this application are far less than the system overheads of the foregoing method for determining the antenna combination by sending the probe packet. For example, air interface overheads of the method provided in embodiments of this application are low, or it may be understood that interaction time of a related frame used for antenna pairing is short, and a first communication apparatus obtains an antenna pairing result fast.

The method provided in embodiments of this application may be applied to the system shown in FIG. 1 or the system shown in FIG. 2. In an example, the first communication apparatus may be the AP, and the second communication apparatus may be the STA. In another example, the first communication apparatus may be the STA, and the second communication apparatus may be the AP. In still another example, the first communication apparatus may be the network device, and the second communication apparatus may be the terminal device. In still another example, the first communication apparatus may be the terminal device, and the second communication apparatus may be the network device. In still another example, the first communication apparatus may be a chip, a chip system, or the like disposed in the AP, and the second communication apparatus may be a chip, a chip system, or the like disposed in the STA. In still another example, the first communication apparatus may be a chip, a chip system, or the like disposed in a network device, and the second communication apparatus may be a chip, a chip system, or the like disposed in the terminal device. Specific forms of the first communication apparatus and the second communication apparatus are not enumerated one by one in embodiments of this application. It may be understood that, when the communication apparatus is the chip or the chip system, a transmit antenna combination in the first communication apparatus shown below may be understood as a transmit antenna combination in a device corresponding to the chip or the chip system (for example, the chip or the chip system is disposed in the device), and a receive antenna combination in the second communication apparatus may be understood as a receive antenna combination in a device corresponding to the chip or the chip system (for example, the chip or the chip system is disposed in the device).

It may be understood that the devices in FIG. 1 and FIG. 2 are merely examples, but any apparatus that can implement the method provided in embodiments of this application falls within the protection scope of embodiments of this application. Therefore, the devices listed above should not be understood as a limitation on embodiments of this application.

It may be understood that, in embodiments of this application, the method provided in embodiments of this application is described by using the first communication apparatus and the second communication apparatus. However, in a process of transmitting information between the first communication apparatus and the second communication apparatus, there may be another apparatus, for example, a forwarding apparatus that forwards information between the first communication apparatus and the second communication apparatus. Therefore, in embodiments of this application, mutual information transfer may be implemented by using a technical means that can be completed by a person skilled in the art. An apparatus other than the first communication apparatus and the second communication apparatus is not limited in embodiments of this application.

The following describes the antenna combination in embodiments of this application in detail.

For example, the antenna combination may be understood as a combination of a radio frequency chain and an antenna in a communication apparatus, or may be understood as a mode of the radio frequency chain and the antenna in the communication apparatus. For example, the antenna combination may be understood as a number of antenna combinations used to receive/send signals in the communication apparatus. For example, for the first communication apparatus, a transmit antenna combination number may be understood as a number of different antennas used by the first communication apparatus to send a measurement frame (which is merely an example).

It may be understood that the antenna combination shown embodiments of this application may also be referred to as an antenna mode. For example, the transmit antenna combination may be referred to as a transmit antenna mode, a TX antenna mode, or a transmit antenna combination mode, and the receive antenna combination may be referred to as a receive antenna mode, an RX antenna mode, or a receive antenna combination mode. Specific names of the antenna combinations are not enumerated one by one in embodiments of this application.

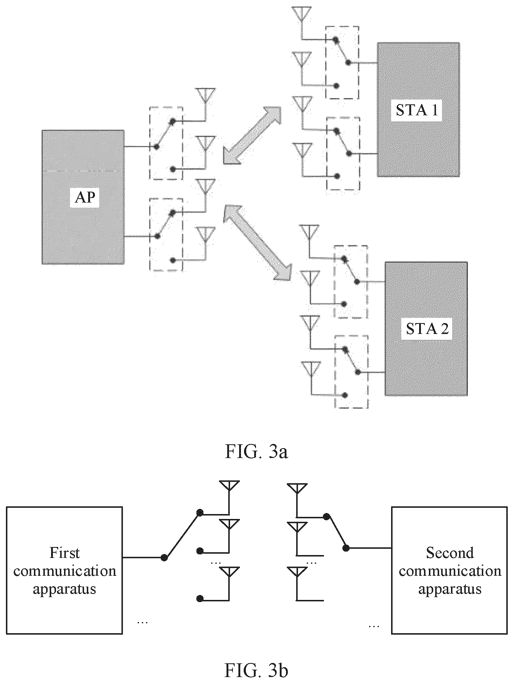

FIG. 3a is a diagram of an antenna combination according to an embodiment of this application. FIG. 3a is used as an example. For an AP, one radio frequency chain corresponds to two antennas. Therefore, one radio frequency chain may be understood as having two antenna selection manners, and an antenna combination number (or a transmit antenna combination number) of the AP may be understood as 2 * 2 = 4. Similarly, for a STA 1 and a STA 2, antenna combination numbers in the STA 1 and the STA 2 are both 4.

FIG. 3b is a diagram of an antenna combination according to an embodiment of this application. FIG. 3b is used as an example. For a first communication apparatus, one radio frequency chain may correspond to X antennas. Therefore, one radio frequency chain may be understood as having X antenna selection manners. X may be understood as an integer greater than or equal to 1. The first communication apparatus may have Y radio frequency chains, and Y may be understood as an integer greater than or equal to 1. It may be understood that a part omitted by an ellipsis shown in FIG. 3b may be an antenna corresponding to a radio frequency chain and the radio frequency chain.

Therefore, for the first communication apparatus, when an antenna number corresponding to each radio frequency chain is X, an antenna combination number (for example, a transmit antenna combination number) of the first communication apparatus may be understood as $X^Y$. For example, X=4, Y=2, and the antenna number corresponding to each radio frequency chain is 4. For the antenna number, the first communication apparatus has eight antennas. However, for the antenna combination number, because each radio frequency chain corresponds to four antennas, the antenna combination number may be 4 * 4 = 16.

For the first communication apparatus, the antenna number corresponding to each radio frequency chain may be different. For example, antenna numbers corresponding to radio frequency chains of the first communication apparatus are sequentially X1, X2, X3, ..., and Xn, and antenna combination numbers (for example, transmit antenna combination numbers) may be understood as X1*X2*X3 *... *Xn.

It may be understood that, for descriptions of an antenna combination number (for example, a receive antenna combination number) in a second communication apparatus, refer to the first communication apparatus. Details are not described in this embodiment of this application again.

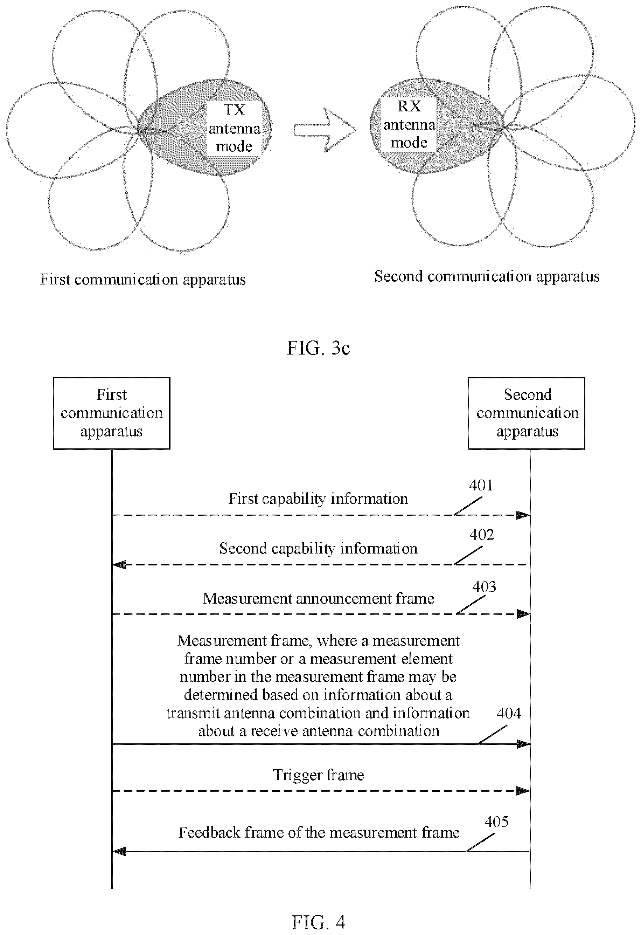

FIG. 3c is a diagram of performing communication by using a best antenna mode pairing combination according to an embodiment of this application. As shown in FIG. 3c, for a scenario in which both a first communication apparatus and a second communication apparatus support smart antennas (for example, base and satellite routers, a repeater (repeater), a mesh node, or an 11ad device), best TX and RX antenna mode combinations are quickly selected through cooperation and interaction between the two communication parties. Therefore, the two communication parties may communicate with each other by using the best antenna mode combinations.

It may be understood that the antenna combinations in a process of performing an antenna pairing method between the first communication apparatus and the second communication apparatus may be antenna combinations corresponding to all radio frequency chains in the apparatuses, or may be antenna combinations corresponding to some radio frequency chains, or the like. This is not limited in embodiments of this application.

FIG. 4 is a schematic flowchart of an antenna pairing method according to an embodiment of this application. As shown in FIG. 4, the method includes the following steps.

In a possible implementation, the method shown in FIG. 4 includes step 401 to step 403.

401: A first communication apparatus sends first capability information, and correspondingly, a second communication apparatus receives the first capability information.

For example, the first capability information indicates an antenna pairing capability of the first communication apparatus, and the first capability information includes at least one of the following: whether the first communication apparatus supports the antenna pairing capability, a transmit antenna combination number or index in the first communication apparatus, and time at which the first communication apparatus switches a transmit antenna combination. The first communication apparatus sends the first capability information, so that the second communication apparatus can effectively learn of the transmit antenna combination number in the first communication apparatus associated with (or communicating with) the second communication apparatus, to quickly perform antenna pairing subsequently based on the number.

The transmit antenna combination number in the first communication apparatus in the first capability information may be understood as that the first capability information carries a transmit antenna combination number in the first communication apparatus. Therefore, a number of transmit antenna combinations used for the antenna pairing in the first communication apparatus can be conveniently and effectively notified.

The transmit antenna combination index in the first communication apparatus in the first capability information may be understood as that the first capability information carries each transmit antenna combination index in the first communication apparatus. Therefore, based on the indexes in the first capability information, the second communication apparatus may not only learn of the transmit antenna combination number in the first communication apparatus, but also learn of each transmit antenna combination index.

It may be understood that the transmit antenna combination number (or index) indicated in the first capability information may be understood as the number (or indexes) of transmit antenna combinations used for the antenna pairing in the first communication apparatus. The number of transmit antenna combinations used for the antenna pairing may be less than or equal to all transmit antenna combination numbers (or indexes) in the first communication apparatus.

402: The second communication apparatus sends second capability information, and correspondingly, the first communication apparatus receives the second capability information.

For example, the second capability information indicates an antenna pairing capability of the second communication apparatus, and the second capability information includes at least one of the following: whether the second communication apparatus supports the antenna pairing capability, a receive antenna combination number or index in the second communication apparatus, and time at which the second communication apparatus switches the receive antenna combination.

For descriptions of the second capability information, refer to the first capability information. Details are not described herein again. It may be understood that a sequence of sending the first capability information and the second capability information is not limited in this embodiment of this application. During specific implementation, when the two communication parties exchange capabilities, the first capability information and the second capability information may not be distinguished. Therefore, names of the first capability information and the second capability information are not limited in this embodiment of this application. For example, the first capability information and the second capability information may also be collectively referred to as smart antenna capability information, smart antenna capability information elements, capability information, or the like.

For example, in an association phase between an AP and a STA, the two communication parties may carry the capability information via a beacon frame, a probe frame, an association frame, or the like. For example, the AP may carry the first capability information via at least one of a beacon (beacon) frame, a probe response (probe response) frame, and an association response (association response) frame. The STA may carry the second capability information via at least one of a probe request (probe request) frame or an association request (association request) frame. The first capability information and the second capability information shown in this embodiment of this application may be carried in the foregoing frames in forms of elements, or may be carried in the foregoing frames in forms of fields. Specific forms of the first capability information and the second capability information in the frames are not limited in this embodiment of this application.

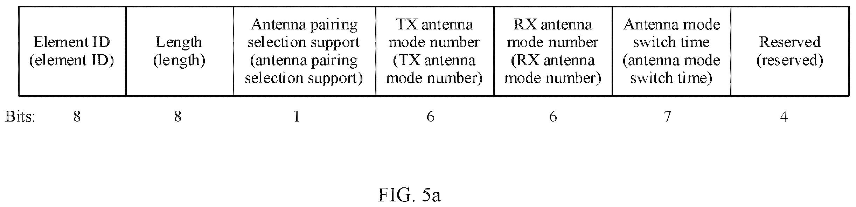

FIG. 5a is a diagram of a format of a smart antenna capability information element according to an embodiment of this application. The smart antenna capability information element may carry capability information of a device. As shown in FIG. 5a, the smart antenna capability information element may include at least one of the following fields: an element ID (element ID) field, a length (length) field, an antenna pairing selection support (antenna pairing selection support) field, a transmit (transmit, TX) antenna mode number (TX antenna mode number) field (or referred to as a TX antenna combination number field), a receive (receive, RX) antenna mode number (RX antenna mode number) field (or referred to as an RX antenna combination number field), and an antenna mode switch time (antenna mode switch time) field (or referred to as an antenna combination switch time field). The element ID field may indicate an ID of an element, and two communication parties may learn, based on the element ID field, that the element is the smart antenna capability information element. For example, a value of the element ID field may be any one of 2, 4, 8 and 9, 17 to 31, 47, 49, 77, 103, 128 and 129, 133 to 136, 149 and 150, 155 and 156, 165, 173, 176, 178 to 180, 203, 218 to 219, 227, 238, 243, and 245 to 254. The length field may indicate a length of the element. The antenna pairing selection support field indicates whether smart antenna selection is supported. For example, if a value carried in the antenna pairing selection support field is 1, it may indicate that a communication apparatus supports antenna pairing; or if a value carried in the antenna pairing selection support field is 0, it may indicate that a communication apparatus does not support antenna pairing. The TX antenna mode number field may indicate a transmit antenna combination number in the communication apparatus. For example, the TX antenna mode number field may alternatively be replaced with a TX antenna mode index field, and the TX antenna mode index field may indicate a transmit antenna combination index in the communication apparatus. The RX antenna mode number field may indicate a receive antenna combination number in the communication apparatus. For example, the RX antenna mode number field may alternatively be replaced with an RX antenna mode index field, and the RX antenna mode index field may indicate a receive antenna combination index in the communication apparatus. The antenna mode switch time field may indicate time at which the communication apparatus switches from one transmit antenna combination to another transmit antenna combination. A PE time length in a training field shown below needs to be not less than maximum antenna mode switch time of a transmit device and all receive devices participating in measurement. Therefore, the antenna mode switch time field is carried in the information element, so that PE time can be set based on the antenna switch time of the device participating in measurement. The communication apparatus may include the first communication apparatus or the second communication apparatus.

In an example, the smart antenna capability information element may be shown in FIG. 5a, and a length of each field may be shown in FIG. 5a. It may be understood that, during specific implementation, the length of each field may vary depending on a specific implementation. The length of each field is not limited in this embodiment of this application.

In another example, for the first communication apparatus, the smart antenna capability information element may include the element ID field, the length field, the antenna pairing selection support field, the TX antenna mode number (or TX antenna mode index) field, and the antenna mode switch time field. For the second communication apparatus, the smart antenna capability information element may include the element ID field, the length field, the antenna pairing selection support field, the RX antenna mode number (or RX antenna mode index) field, and the antenna mode switch time field. Regardless of how the length of each field in the smart antenna capability information element varies, in this example, the TX antenna mode number field and the RX antenna mode number field have a same length. Therefore, it can be ensured that the two communication parties can accurately parse the smart antenna capability information element.

For ease of description, in the following, a transmit antenna combination number indicated by the TX antenna mode number field is denoted as M_tx, and a receive antenna combination number indicated by the RX antenna mode number field is denoted as M_rx. A name of the smart antenna capability information element shown in this embodiment of this application is merely an example, and should not be construed as a limitation on embodiments of this application.

For example, when both the first communication apparatus and the second communication apparatus support smart antenna selection, the first communication apparatus may perform step 403. In other words, when the first communication apparatus supports the antenna pairing capability and the second communication apparatus supports the antenna pairing capability, the first communication apparatus may send a measurement announcement frame. Alternatively, it may be understood that the first communication apparatus may send a measurement announcement frame when receiving the second capability information.

403: The first communication apparatus sends the measurement announcement frame, and correspondingly, the second communication apparatus receives the measurement announcement frame.

For example, when the first communication apparatus performs antenna pairing with the second communication apparatus, the first communication apparatus may send the measurement announcement frame in a unicast manner. When the first communication apparatus performs antenna pairing with a plurality of second communication apparatuses, the first communication apparatus may send the measurement announcement frame in a broadcast manner, to improve antenna pairing efficiency.

For example, the measurement announcement frame may include at least one of the following information: the transmit antenna combination number or index, the receive antenna combination number or index, and a paired antenna combination number in an antenna pairing result. Optionally, the measurement announcement frame may further include at least one of the following: an identifier of the second communication apparatus that performs antenna measurement and a number of second communication apparatuses. It may be understood that the transmit antenna combination index may also be referred to as a transmit antenna combination identifier, or information used to identify an antenna mode, or a transmit antenna ID (antenna ID), or the like. The receive antenna combination index may also be referred to as a receive antenna combination identifier, or information used to identify an antenna mode, or a receive antenna ID, or the like.

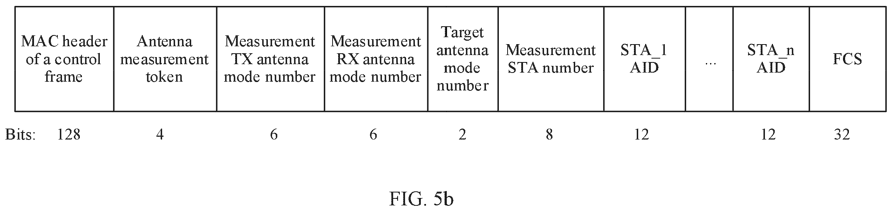

For example, FIG. 5b is a diagram of a format of a measurement announcement frame according to an embodiment of this application. As shown in FIG. 5b, the measurement announcement frame may include the following fields: a medium access control (medium access control) of a control frame field, an antenna measurement token (antenna measurement token) field, a measurement TX antenna mode number (measurement TX antenna mode number, M_tx) field, a measurement RX antenna mode number (measurement RX antenna mode number, M rx) field, a target antenna mode number (target antenna mode number, K) field (or referred to as a best antenna mode number (best antenna mode number, K) field), a measurement STA number (measurement STA number, N) field (or a measurement UE number (measurement UE number, N) field), STA_n association ID (association ID, AID) fields, and a frame check sequence (frame check sequence, FCS) field. A value of n ranges from 1 to N. It may be understood that, the measurement TX antenna mode number field may alternatively be replaced with a measurement TX antenna mode index field, and the measurement RX antenna mode number field may be replaced with a measurement RX antenna mode index field.

The antenna measurement token field may be used to identify a round of antenna measurement. For example, the field may occupy 4 bits. The measurement TX antenna mode number field may indicate a number of transmit antenna combinations that need to be measured. For example, a number of bits occupied by the field may be 6 bits, that is, values of [0, 63] sequentially correspond to measurement antenna mode numbers [1, 64]. The measurement RX antenna mode number field may indicate a largest number of receive antenna combinations that need to be measured (for example, a largest RX antenna mode number in all second communication apparatuses participating in measurement at this time). For example, a number of bits occupied by the field may be 6 bits, that is, values of [0, 63] sequentially correspond to measurement antenna mode numbers [1, 64]. The target antenna mode number field may indicate a number K of antenna pairing results fed back in a feedback frame. For example, the field may occupy 2 bits, that is, values of [0, 3] sequentially correspond to target antenna mode numbers [1, 4]. The measurement STA number field may indicate a number of STAs that need to perform antenna pairing or a number of STAs that need to measure antenna information. For example, the field may occupy 8 bits. Each field in the STA_n association ID (STA_n AID) fields may indicate an AID of a corresponding STA that needs to perform antenna measurement. For example, each field may occupy 12 bits, and n may be a positive integer.

It may be understood that a format of the measurement announcement frame shown in FIG. 5b is merely an example. During specific implementation, there may be more or fewer fields than those in FIG. 5b. This is not limited in embodiments of this application.

404: The first communication apparatus sends a measurement frame, and correspondingly, the second communication apparatus receives the measurement frame.

In an example, a measurement frame number may be determined based on information about the transmit antenna combination in the first communication apparatus and information about the receive antenna combination in the second communication apparatus. In another example, a measurement element number in the measurement frame may be determined based on information about the transmit antenna combination in the first communication apparatus and information about the receive antenna combination in the second communication apparatus. In this embodiment of this application, the information about the transmit antenna combination may include the transmit antenna combination number or index, and the information about the receive antenna combination may include the receive antenna combination number or index. It may be understood that the information about the transmit antenna combination may further include another type of information like the transmit antenna combination identifier, and the information about the receive antenna combination may further include the receive antenna combination identifier and the like. Examples are not enumerated one by one in this embodiment of this application.

For example, the measurement frame number or the measurement element number in the measurement frame may be equal to a product of the transmit antenna combination number in the first communication apparatus and a largest receive antenna combination number in the plurality of second communication apparatuses. The largest receive antenna combination number in the plurality of second communication apparatuses shown herein may be understood as a largest receive antenna combination number in receive antenna combination numbers of the plurality of second communication apparatuses. For example, if there are n STAs in the measurement announcement frame, the measurement frame number or the measurement element number may be equal to a product of the transmit antenna combination number and a largest receive antenna combination number in receive antenna combination numbers of the n STAs. Certainly, if the first communication apparatus performs antenna pairing with one second communication apparatus, the measurement frame number or the measurement element number is equal to a product of the transmit antenna combination number of the first communication apparatus and a receive antenna combination number of the second communication apparatus. For example, the first communication apparatus may perform antenna pairing channel measurement with the second communication apparatus or with the plurality of second communication apparatuses in parallel. If there are N second communication apparatuses, and a receive antenna combination number in each second communication apparatus is $M\_rx(i)$, $M\_rx=max\{M\_rx(i)\}$, where i=1, 2, ..., N. Therefore, a combination number (or understood as the measurement frame number and the measurement element number) that is needed for antenna pairing is $M\_tx*M\_rx$. Therefore, it can be effectively ensured that all the second communication apparatuses can perform antenna pairing with the first communication apparatus.

In an example, the measurement frame includes an NDP frame, and the NDP frame includes at least one of the following: information identifying that the NDP frame is used for antenna measurement, and a transmit antenna combination identifier corresponding to the NDP frame. For specific descriptions of the measurement frame, refer to the following implementation 1.

In another example, the measurement frame includes a PPDU, and the PPDU may include a measurement element. For example, the measurement element may be a training field in the PPDU. For specific descriptions of the measurement frame, refer to the following implementation 2.

For example, the second communication apparatus sequentially switches receive antenna combinations based on the measurement announcement frame and a switching sequence, and receives the measurement frame based on the switched receive antenna combinations. For example, the second communication apparatus may sequentially switch the receive antenna combinations based on the switching sequence, and receive the measurement frame based on the receive antenna combinations. For example, the second communication apparatus may learn of the measurement frame number or the measurement element number based on the transmit antenna combination number and the receive antenna combination number in the measurement announcement frame, and sequentially learn of, based on the switching sequence, transmit antenna combinations corresponding to the receive antenna combinations. For example, the second communication apparatus may store a transmit antenna combination index corresponding to each receive antenna combination index, or store a transmit antenna combination index and a receive antenna combination index that correspond to channel information obtained based on the measurement frame.

Information about the switching sequence may be included in the measurement announcement frame; or the information about the switching sequence is defined by a standard. For specific descriptions of the switching sequence, refer to the following implementation 1 and implementation 2. For a method for measuring the channel information based on a training field or an NDP frame described below, refer to a method for measuring a probe channel. This is not limited in embodiments of this application.

405: The second communication apparatus sends a feedback frame of the measurement frame, and correspondingly, the first communication apparatus receives the feedback frame. The feedback frame is used to feed back an antenna pairing result between the first communication apparatus and the second communication apparatus.

For example, the feedback frame may include at least one of the following: a transmit antenna combination index in the antenna pairing result, a receive antenna combination index in the antenna pairing result, and a pairing probability of the antenna pairing result.

In an example, antenna pairing results may be all pairing results between the transmit antenna combinations in the first communication apparatus and the receive antenna combinations in the second communication apparatus. For example, the feedback frame may include M_tx*M_rx(i) antenna pairing results, where M_tx is the transmit antenna combination number in the first communication apparatus, and M_rx(i) is the receive antenna combination number in the second communication apparatus. In another example, antenna pairing result may be antenna pairing in first K bits between the transmit antenna combinations in the first communication apparatus and the receive antenna combinations in the second communication apparatus. For example, each second communication apparatus determines a recommended antenna combination pairing result. For example, for an $i^{th}$ second communication apparatus, the $i^{th}$ second communication apparatus may determine, based on pairing of stored M=M_tx*M_rx(i) antenna combinations, first K pieces of best antenna combination pairing and a corresponding pairing probability. For example, the feedback frame may include a best TX antenna mode ID (best TX antenna mode ID) (k) field: a transmit antenna mode ID of a $k^{th}$ (k=0, ..., K-1) piece of best pairing, a best RX antenna mode ID (best RX antenna mode ID) (k) field: a receive antenna mode ID of a $k^{th}$ (k=0, ..., K-1) piece of best pairing, and a best probability (best probability) (k) field: a best probability corresponding to a $k^{th}$ (k=0, ..., K-1) piece of best pairing. K is a positive integer.

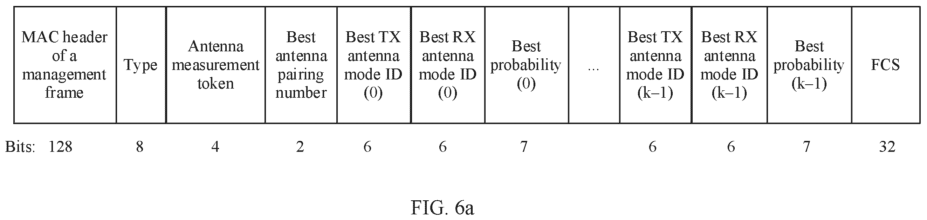

The feedback frame shown in this embodiment of this application may also be referred to as an antenna pairing selection report. A physical frame format of the feedback frame may comply with a standard TB PPDU format like HE or EHT, and a MAC frame type is an action (action) frame subtype in a management frame type. FIG. 6a is a diagram of a format of a feedback frame according to an embodiment of this application. As shown in FIG. 6a, the feedback frame may include a MAC frame header of a management frame field. The MAC frame header of the management frame field may be defined in a protocol. A type field may be an action frame type field, and a value of the action frame type field may be any one of 21 to 125. An antenna measurement token (antenna measurement token) field in the feedback frame may indicate a trigger feedback for a round of antenna pairing measurement whose token serial number is the value and corresponds to a token value in a measurement announcement frame. A best antenna pairing number (best antenna pairing number) may indicate a best antenna mode pairing number that is fed back (for example, the best antenna mode pairing number may be equal to a number K indicated by a field corresponding to a trigger frame). A best TX antenna mode ID (k) (best TX antenna mode ID (k)) field indicates a TX antenna mode ID of a $k^{th}$ (k=0, ..., K-1) piece of best pairing. A best RX antenna mode ID (k) (best RX antenna mode ID (k)) field (6 bits) indicates an RX antenna mode ID of a $k^{th}$ (k=0, ..., K-1) piece of best pairing. A best probability (k) (best probability (k)) indicates a probability that a $k^{th}$ (k=0, ..., K-1) piece of pairing is best antenna mode pairing. For a length of each field, refer to FIG. 6a. Lengths and a sequence of fields shown in FIG. 6a are merely examples, and should not be construed as a limitation on embodiments of this application.

The following describes in detail a method for determining an antenna pairing result by a second communication apparatus.

For example, the second communication apparatus may determine a plurality of pieces of channel information based on a transmit antenna combination and a receive antenna combination that correspond to a measurement frame, determine target channel information in the plurality of pieces of channel information by using an AI algorithm, and determine an antenna pairing result based on the target channel information, where an input of the AI algorithm includes the plurality of pieces of channel information, and an output of the AI algorithm includes the target channel information, and generate a feedback frame based on the antenna pairing result. In other words, the second communication apparatus may determine the channel information between the transmit antenna combination and the receive antenna combination via the measurement frame received by the second communication apparatus by using the receive antenna combination and the known transmit antenna combination corresponding to the receive antenna combination. For example, an $i^{th}$ second communication apparatus may obtain M_tx*M_rx(i) pieces of channel information. Then, the second communication apparatus may select K pieces of target channel information from the M_tx*M_rx(i) pieces of channel information. Channel quality of the target channel information is better than that of other channel information in the M_tx*M_rx(i) pieces of channel information. A transmit antenna combination index and a receive antenna combination index that correspond to the target channel information may be carried in the feedback frame.

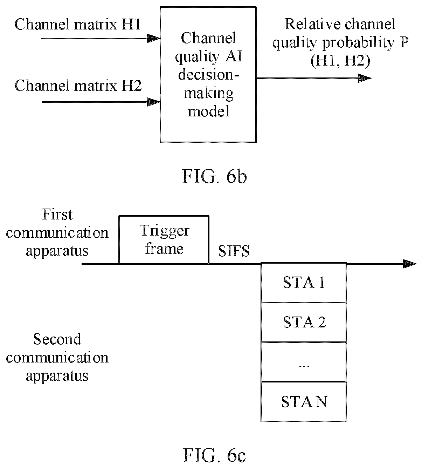

For example, for channel matrices H1 and H2 corresponding to any two pieces of input antenna pairing, the second communication apparatus locally supports prediction, by using the AI algorithm, of a relative quality probability (Better_probability (P)) of the two channel matrices. A value range of the predicted probability is [0, 100%], indicating a probability that channel matrix H1 is better than channel matrix H2, where P>50% indicates that H1 is better than H2, and P<50% indicates that H1 is worse than H2. As shown in FIG. 6b, a channel quality AI decision-making model may perform decision-making on two input channel matrices (for example, the channel matrix H1 and the channel matrix H1), to determine a relative channel quality probability. For example, the AI model may use a deep neural network (deep neural network, DNN) or a convolutional neural network (convolutional neural network, CNN), or may be combined with H-matrix singular value decomposition (singular value decomposition, SVD) to extract a feature quantity. The AI model may be trained by using label sample data of {X=(H1, H2), Y=throughput performance quality}. According to the foregoing method, the second communication apparatus may determine, by using the AI model, a relative quality probability between every two of the M antenna pairing channel matrices, and there are a total of M*(M-1)/2 probability values. Based on these probability values, a probability $P_{best}$ that a $k^{th}$ piece of antenna mode pairing is the best antenna mode pairing may be calculated.

For example, $P_{best}(k) = \frac{1}{M-1} \sum_{i=1, i \neq k}^{M} P(H_k, H_i)$ , where M is an antenna mode pairing number (that is, M=M_tx*M_rx), i and k are antenna mode pairing serial numbers, and $H_i$ and $H_k$ are channel matrices corresponding to pieces of antenna mode pairing numbered i and k. It may be understood that the piece of antenna mode pairing numbered i (or k) shown in this embodiment of this application may correspond to one transmit antenna combination and one receive antenna combination.

The second communication apparatus may select first K antenna modes with largest $P_{best}$ from the M pieces of antenna mode pairing. As shown in Table 1, the second communication apparatus may select first four pieces of best pairing from eight pieces of antenna mode pairing.

Table 1

| No. | 1 | 2 | 3 | 4 | 5 | 6 | 7 | 8 | $P_{best}$ | Rank |
|---|---|---|---|---|---|---|---|---|---|---|
| 1 | N/A | 0.8 | 0.7 | 0.5 | 0.6 | 0.85 | 0.65 | 0.9 | 0.71 | Top 2 |
| 2 | 0.2 | N/A | 0.4 | 0.3 | 0.2 | 0.4 | 0.5 | 0.4 | 0.37 | 7 |
| 3 | 0.3 | 0.6 | N/A | 0.8 | 0.9 | 0.7 | 0.85 | 0.7 | 0.76 | Top 1 |
| 4 | 0.5 | 0.7 | 0.2 | N/A | 0.3 | 0.5 | 0.7 | 0.6 | 0.50 | 5 |
| 5 | 0.4 | 0.8 | 0.1 | 0.7 | N/A | 0.2 | 0.7 | 0.6 | 0.52 | Top 4 |
| 6 | 0.15 | 0.6 | 0.3 | 0.5 | 0.8 | N/A | 0.9 | 0.8 | 0.65 | Top 3 |
| 7 | 0.35 | 0.5 | 0.25 | 0.3 | 0.3 | 0.1 | N/A | 0.5 | 0.33 | 8 |
| 8 | 0.1 | 0.6 | 0.3 | 0.4 | 0.4 | 0.2 | 0.5 | N/A | 0.40 | 6 |

It may be understood that the values shown in Table 1 are merely examples, and should not be construed as a limitation on embodiments of this application. N/A in Table 1 may be understood as "not applicable". For example, when a row serial number and a column serial number are the same, the row serial number and the column serial number correspond to same antenna mode pairing, and quality probability is not applicable. $P_{best}$ may be understood as an average value of a sum of the third column to the ninth column in a corresponding row in Table 1, for example, 0.71 = (0.8 + 0.7 + 0.5 + 0.6 + 0.85 + 0.65 + 0.9)/7.

When the first communication apparatus simultaneously performs antenna pairing with a plurality of second communication apparatuses, after sending the measurement frame, the first communication apparatus may send a trigger (trigger) frame, where the trigger frame is used to trigger the second communication apparatus to send the feedback frame. For example, the second communication apparatuses send feedback frames (or referred to as antenna pairing selection reports or the like) to the first communication apparatus. As shown in FIG. 6c, to improve feedback efficiency of the second communication apparatus, the first communication apparatus may broadcast an antenna pairing feedback trigger frame to the plurality of second communication apparatuses. After a short interframe space (short interframe space, SIFS) (for example, 16 μs), the second communication apparatuses may send feedback frames in parallel in an uplink orthogonal frequency division multiple access (orthogonal frequency division multiple access, OFDMA) manner.

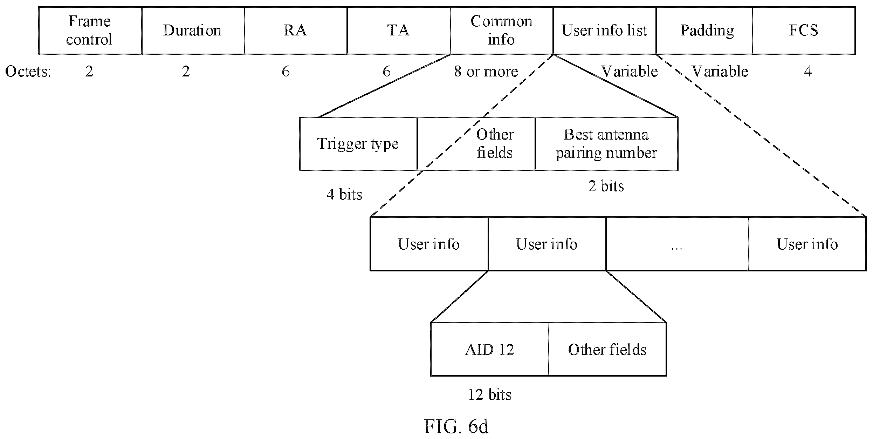

For example, a format of the trigger frame may be extended based on a general format of a high efficiency (high efficiency, HE) or extremely high throughput (extremely high throughput, EHT) trigger frame, and the plurality of second communication apparatuses may be triggered to simultaneously reply with TB PPDUs (used to carry the feedback frames). FIG. 6d is a diagram of a format of a trigger frame according to an embodiment of this application. As shown in FIG. 6d, the trigger frame may include at least one of the following fields: a frame control (frame control) field, a duration (duration) field, a receive address (receive address, RA) field, a transmit address (transmit address, TA) field, a common information (common info) field, a user information list (user info list) field, a padding (padding) field, and an FCS field. For example, a trigger type field in the common information field may carry any value of 8 to 15. Table 2 shows an example in which 8 is used, indicating that the trigger frame is a trigger frame for an antenna pairing feedback frame. Trigger dependent common info refers to "trigger dependent common information". Because there are a plurality of types of trigger frames, a definition of the variable-length field depends on a specific trigger frame type. For the antenna pairing feedback trigger frame, this field is defined as a best antenna mode number. In other words, in this embodiment of this application, the trigger dependent common info variable-length field in the common info field is defined as the best antenna mode number, and indicates a best antenna mode number expected to be fed back by each user. The field may occupy 2 bits, and values of [0,3] correspond to numbers [1,4]. An AID 12 field in each user information field may indicate an association ID of a STA that expects to trigger a feedback of a best antenna.

Meanings of values carried in the trigger type field may be shown in Table 2.

Table 2

| Value of the trigger type field | Variation of the trigger frame |
|---|---|
| 0 | Basic (basic) |
| 1 | Beamforming report poll (Beam forming report poll, BFRP) |
| 2 | MU-BAR |
| 3 | MU-RTS |
| 4 | Buffer status report poll (buffer status report poll, BSRP) |
| 5 | Groupcast with retries multi-user block acknowledgment request (groupcast with retries multi-user block ack request, GCR MU-BAR) |
| 6 | Bandwidth query report poll (bandwidth query report poll, BQRP) |
| 7 | NDP feedback report poll (NDP feedback report poll, NFRP) |
| 8 | Antenna pairing feedback trigger (antenna pairing feedback trigger) |
| 9 to 15 | Reserved (reserved) |

The method shown in FIG. 4 may further include: communicating with a second communication apparatus based on an antenna pairing result that is fed back via the feedback frame and that corresponds to the second communication apparatus.

In other words, a first communication apparatus may communicate with a corresponding second communication apparatus based on an antenna pairing result in a feedback frame fed back by each second communication apparatus.

In this embodiment of this application, the first communication apparatus sends a measurement frame, so that the second communication apparatus can determine the antenna pairing result between the two communication parties based on the measurement frame. Therefore, after obtaining the antenna pairing result, the first communication apparatus performs communication based on the antenna pairing result. Because the antenna pairing result is a better antenna pairing combination between the two communication parties, communication based on an antenna combination indicated by the antenna pairing result can effectively improve efficiency of the communication between the two communication parties. In addition, antenna pairing is performed based on the measurement frame shown in this embodiment of this application, so that an increase in system overheads can be effectively reduced.

For example, for a current solution of sending a probe packet, air interface overheads may be understood as an O (N*M) magnitude, and memory overheads may be understood as an O (N*M) magnitude. As a result, system overheads of the solution for sending the probe packet increase rapidly as M and N increase. However, in this embodiment of this application, the first communication apparatus sends the measurement frame, so that the second communication apparatus determines the antenna pairing result. In addition, air interface overheads occupied by the measurement frame are far less than the air interface overheads of the probe packet. Therefore, even if M and N increase, the system overheads are not excessively high.

For example, currently, there is still a solution that supports selection of only a TX antenna combination or an RX antenna combination of a specific smart antenna device. However, in this solution, if two communication parties support smart antennas, best TX and RX antenna combinations paired with the two communication parties cannot be selected.

The following describes a measurement frame in embodiments of this application in detail. It may be understood that, for specific descriptions of the measurement frame shown in FIG. 4, refer to the following implementation 1 and implementation 2.

Implementation 1: The measurement frame includes an NDP frame.

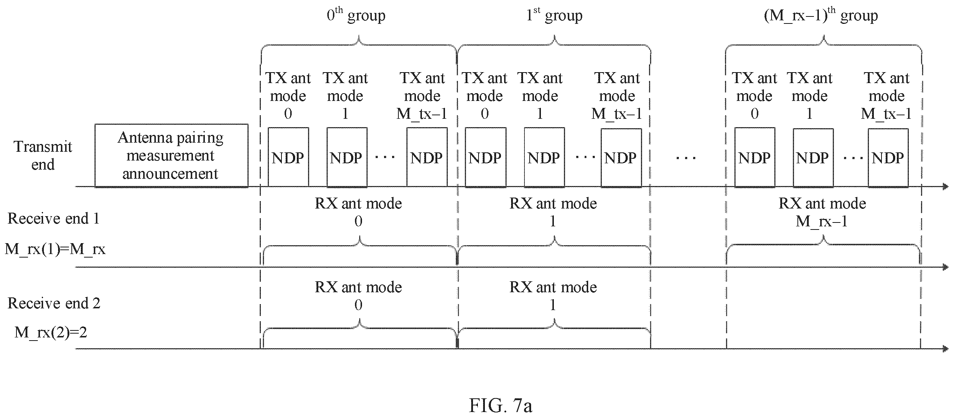

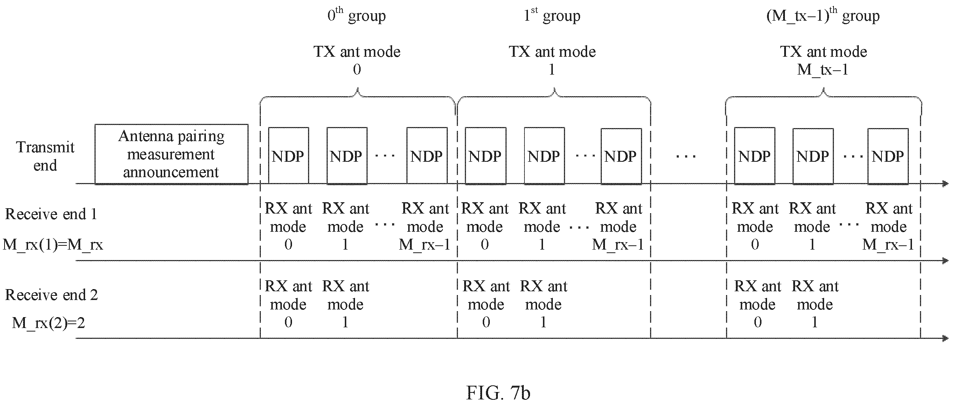

For example, waiting for an SIFS after a measurement announcement frame (a transmit end shown in FIG. 7a and FIG. 7b sends the antenna pairing measurement announcement frame) is sent, the transmit end may continuously send M_tx*M_rx NDP frames (an interval between the NDP frames may be the SIFS). The transmit end and a receive end may switch a sequence (or referred to as a specific sequence) to cooperate in switching a transmit antenna combination and a receive antenna combination. Switching sequences may be as follows:

Sequence 1: As shown in FIG. 7a, the NDP frames are divided into M_rx groups, the transmit end sequentially switches M_tx transmit antenna modes within the groups, and the receive end sequentially switches M_rx receive antenna modes within the groups.

Sequence 2: As shown in FIG. 7b, the NDP frames are divided into M_tx groups, the receive end sequentially switches M_rx receive antenna modes within the groups, and the transmit end sequentially switches M_tx transmit antenna modes within the groups.

The NDP frame shown in this embodiment of this application may be understood as a null data frame, includes only a PHY preamble (preamble), and does not include a MAC frame body.

For FIG. 7a and FIG. 7b, each receive end measures channel information of M_tx*M_rx(i) antenna mode pairs based on the NDP frames.

The transmit end shown in FIG. 7a and FIG. 7b may be understood as a first communication apparatus, a receive end 1 may be understood as a second communication apparatus 1, a receive end 2 may be understood as a second communication apparatus 2, and the antenna pairing measurement announcement (antenna pairing measurement announcement) frame may be understood as a measurement announcement frame. An antenna mode (ant mode) may be understood as an antenna combination, that is, the antenna mode and the antenna combination may be replaced with each other.

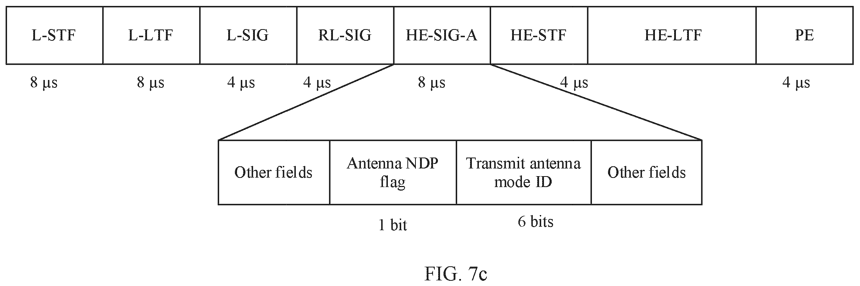

In an example, for a format in an HE protocol, an HE-SIG-A field of the preamble includes a TX antenna mode ID field and an antenna NDP flag field. As shown in FIG. 7c, the NDP frame may include a legacy short training field (legacy short training field, L-STF), a legacy long training field (legacy long training field, L-LTF), a legacy signal field (legacy signal field, L-SIG), a repeated legacy signal field (repeated L-SIG, RL-SIG), a high efficiency signal (high efficiency signal, HE-SIG)-A field, a high efficiency short training field (high efficiency short training field, HE-STF), a high efficiency long training field (high efficiency long training field, HE-LTF), and a packet extension (packet extension, PE) field.

The HE-SIG-A field may include an antenna NDP flag (antenna NDP flag), used to identify whether the NDP is an antenna measurement NDP frame. The HE-SIG-A field may further include a transmit antenna mode ID (TX antenna mode ID), used to identify a corresponding TX antenna mode serial number for sending the NDP frame. Therefore, the receive end can switch to a corresponding receive antenna mode serial number based on the TX antenna mode serial number, to perform an antenna pairing process. In consideration of compatibility with a physical frame format of the HE protocol, a bit 14 (for example, the reserved field) in HE-SIG-A1 is reused for the antenna NDP flag in this embodiment of this application. According to the protocol, a default value of the bit is 1. Therefore, it is agreed that a value 0 of the field indicates that the frame is the antenna measurement NDP frame, and the value 1 of the field indicates that the frame is not the antenna measurement NDP frame. A bit 8 to a bit 13 (BSS color field) in HE-SIG-A1 may be reused for the TX antenna mode ID, as shown in Table 3. In the protocol, HE-SIG-A1 is a part of the HE-SIG-A field. Other fields in FIG. 7c are not limited in this embodiment of this application. Table 3 shows some bits in HE-SIG-A1 in the HE-SIG-A field. For descriptions of another bit, refer to a related standard.

Table 3

| Bit | Field (field) | Number of bits (number of bits) | Description (description) |
|---|---|---|---|
| B8 to B13 | BSS color (TX antenna mode ID) | 6 | Used to identify a transmit antenna mode number corresponding to the NDP frame |
| B14 | Antenna NDP flag | 1 | Used to identify whether the NDP frame is the antenna measurement NDP frame |

It may be understood that, after receiving the measurement announcement frame, the receive end may determine, based on transmission opportunity (transmission opportunity, TXOP) information carried in the frame, that all NDP frames continuously sent within TXOP time are antenna pairing measurement NDP frames, and the bit 8 to the bit 13 in HE-SIG-A1 do not need to be parsed into the BSS color field to determine whether the NDP is a BSS packet. Therefore, the bit 8 to the bit 13 in HE-SIG-A1 may be reused for the TX antenna mode ID.

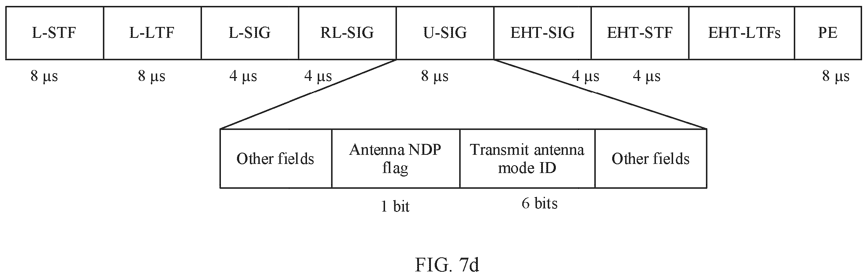

In another example, for a format in an EHT protocol, a U-SIG field of the preamble includes a TX antenna mode ID field and an antenna NDP flag field. As shown in FIG. 7d, the NDP includes a legacy short training field (legacy short training field, L-STF), a legacy long training field (legacy long training field, L-LTF), a legacy signal field (legacy signal field, L-SIG), a repeated legacy signal field (repeated L-SIG, RL-SIG), a universal signal (universal signal, U-SIG) field, an extremely high-throughput signal (extremely high-throughput signal, EHT-SIG) field, an extremely high-throughput short training field (extremely high-throughput short training field, EHT-STF), an extremely high-throughput long training field (extremely high-throughput long training field, EHT-LTF), and a packet extension (packet extension, PE) field.

The U-SIG field may include the TX antenna mode ID field and the antenna NDP flag field. For descriptions of the two fields, refer to FIG. 7c. Details are not described herein again. In consideration of compatibility with a physical frame format of the EHT protocol, a bit 25 (validation field) in U-SIG1 can be reused for the antenna NDP flag field. According to the protocol, a default value of the bit is 1. Therefore, it is agreed that a value 0 of the bit indicates that the frame is an antenna measurement NDP frame, and the value 1 of the bit indicates that the frame is not the antenna measurement NDP frame. A bit 7 to a bit 12 (BSS color field) in U-SIG1 may be reused for the TX antenna mode ID. Table 4 shows some bits in U-SIG1 field in the EHT protocol. For descriptions of another bit, refer to a related standard.

Table 4

| Bit | Field (field) | Number of bits (number of bits) | Description (description) |
|---|---|---|---|
| B7 to B12 | BSS color (TX antenna mode ID) | 6 | Used to identify a transmit antenna mode number corresponding to the NDP frame |
| B25 | Antenna NDP flag | 1 | Used to identify whether the NDP frame is the antenna measurement NDP frame |

For the implementation 1, when receiving an NDP frame, the second communication apparatus may store a measured channel matrix H via a <transmit antenna mode ID, receive antenna mode ID> index based on a transmit antenna mode ID in the NDP frame and a receive antenna mode ID configured by the second communication apparatus. Therefore, the related methods and the like shown in FIG. 6b and FIG. 6c may be subsequently performed.

Implementation 2: The measurement frame includes a PPDU.

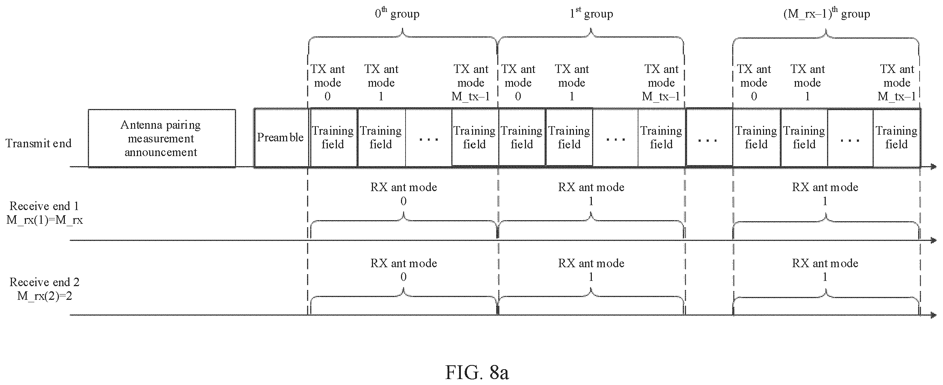

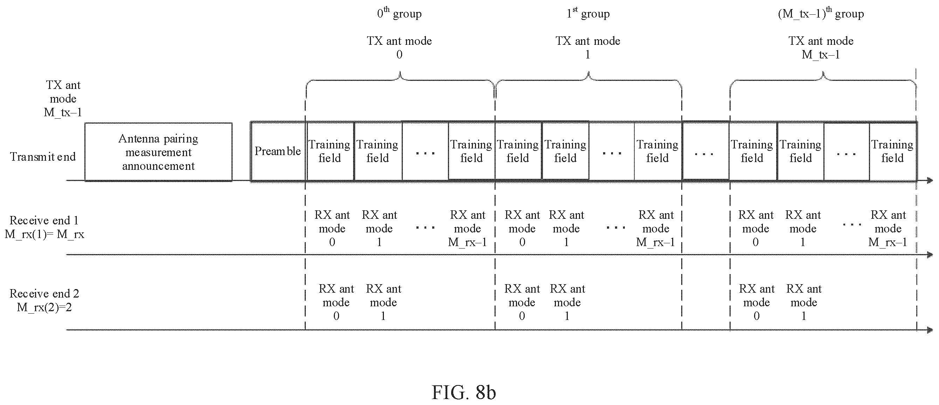

For example, waiting for an SIFS after the measurement announcement frame (a transmit end shown in FIG. 8a and FIG. 8b sends the antenna pairing measurement announcement frame) is sent, the transmit end may send an antenna pairing measurement PPDU, and the PPDU includes M_tx*M_rx physical layer training fields. The transmit end and a receive end may switch a sequence (or referred to as a specific sequence) to cooperate in switching a transmit antenna combination and a receive antenna combination. Switching sequences may be as follows:

Sequence 1: As shown in FIG. 8a, training fields are divided into M_rx groups, the transmit end sequentially switches M_tx transmit antenna modes within the groups, and the receive end sequentially switches M_rx receive antenna modes within the groups.

Sequence 2: As shown in FIG. 8b, training fields are divided into M_tx groups, the receive end sequentially switches M_rx receive antenna modes within the groups, and the transmit end sequentially switches M_tx transmit antenna modes within the groups.

For FIG. 8a and FIG. 8b, each receive end measures channel information of M_tx*M_rx(i) antenna mode pairs based on the training fields.

The transmit end shown in FIG. 8a and FIG. 8b may be understood as a first communication apparatus, a receive end 1 may be understood as a second communication apparatus 1, a receive end 2 may be understood as a second communication apparatus 2, and the antenna pairing measurement announcement (antenna pairing measurement announcement) frame may be understood as a measurement announcement frame. An antenna mode (ant mode) may be understood as an antenna combination, that is, the antenna mode and the antenna combination may be replaced with each other.

For example, the antenna pairing measurement PPDU mainly includes a preamble and a plurality of "training fields", and a number of the training fields is M_tx*M_rx.

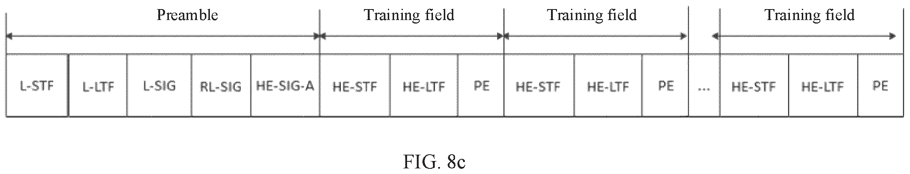

In an example, as shown in FIG. 8c, for an HE protocol, each training field includes: an HE-STF, an HE-LTF, and a PE field. A time length of the PE field is not less than time T_switch for antenna mode switching, to ensure that there is enough time to complete antenna mode switching from an HE-LTF of a previous training field to an HE-STF of a next training field.

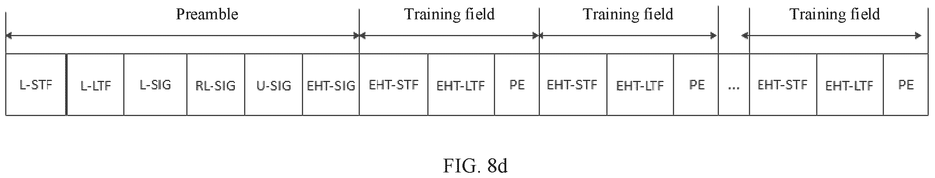

In another example, as shown in FIG. 8d, each training field in an EHT protocol includes an EHT-STF, an EHT-LTF, and a PE field. A time length of the PE field is not less than time T_switch for antenna mode switching, and a reason is the same as that in the HE protocol.

For the implementation 2, when receiving the antenna pairing measurement PPDU, the second communication apparatus may infer, based on an order of the training field, a transmit antenna mode ID corresponding to the training field (for example, because in a measurement process, a rule for switching the transmit antenna combination and the receive antenna combination is agreed upon in advance, and M_tx and M_rx are specified in the antenna pairing measurement announcement frame, it may be inferred that which transmit antenna mode ID corresponds to which training field), and store a measured channel matrix H via a <transmit antenna mode ID, receive antenna mode ID> index based on a receive antenna mode ID for the training field. Therefore, the related methods and the like shown in FIG. 6b and FIG. 6c may be subsequently performed.

For the foregoing implementation 1 and implementation 2, if the two communication parties support 16 antenna modes, one first communication apparatus may correspond to eight second communication apparatuses. Conventional probe solution: sending of each piece of antenna mode pairing via an A-MPDU frame occupies 5 ms, and air interface overheads are 5 ms * 16 TX antenna modes * 16 RX antenna modes * 8 second communication apparatuses = 10240 ms.

Implementation 1: measurement sequence time = antenna measurement frame (36 $\mu$s) + NDP frame (104 $\mu$s) * 16 * 16 + SIFS (16 $\mu$s) * 16 * 16 = 30756 $\mu$s, feedback sequence time = antenna feedback trigger frame (60 $\mu$s) + antenna selection report frame (124 $\mu$s) + SIFS (16) * 2 = 216 $\mu$s, and air interface overhead = measurement sequence time (1956 $\mu$s) + feedback sequence time (216 $\mu$s) = 31 ms (30972 $\mu$s), which is reduced by about 300 times.

Implementation 2: measurement sequence time = antenna measurement frame (36 $\mu$s) + PPDU frame (32 $\mu$s + 20 $\mu$s * 16 * 16) + SIFS (16 $\mu$s) = 5204 $\mu$s, feedback sequence time = antenna feedback trigger frame (60 $\mu$s) + antenna selection report frame (124 $\mu$s) + SIFS (16) * 2 = 216 $\mu$s, and air interface overhead = measurement sequence time (5204 $\mu$s) + feedback sequence time (216 $\mu$s) = 5.4 ms (5420 $\mu$s), which is reduced by about 1600 times.

It can be learned that the solution provided in embodiments of this application effectively reduces the system overheads. In the solution provided in embodiments of this application, for a scenario in which the two communication parties support the smart antennas, air interface overheads and memory overheads for antenna mode pairing selection can be significantly reduced. For each user, in a conventional solution, M_tx*M_rx antenna mode pairing statistic counts are maintained. In this solution, one best antenna mode statistic count may be maintained, and memory overheads may be 1/(M_tx*M_rx) of those in the conventional solution.

It can be learned from the antenna pairing result in the feedback frame described above that the antenna pairing result may be a first piece of antenna pairing between the transmit antenna combination in the first communication apparatus and the receive antenna combination in the second communication apparatus. In other words, the antenna pairing result may be a pairing result that is fed back by the second communication apparatus and that is between one TX antenna mode and one RX antenna mode (for example, may be referred to as a best pairing result ranking first). Alternatively, the antenna pairing result may be antenna pairing in first K bits between the transmit antenna combinations in the first communication apparatus and the receive antenna combinations in the second communication apparatus, where K is an integer greater than or equal to 2. When K is greater than or equal to 2, after the first communication apparatus receives top K pieces of best antenna pairing and corresponding best probability information that are fed back by the second communication apparatus, there may be two processing policies: a policy 1: directly selecting a top 1 best pairing antenna mode, and a policy 2: performing supplementary probing for best pairing antenna modes with similar best probabilities. The following describes in detail a method for performing antenna pairing supplementary probing by the two communication parties.

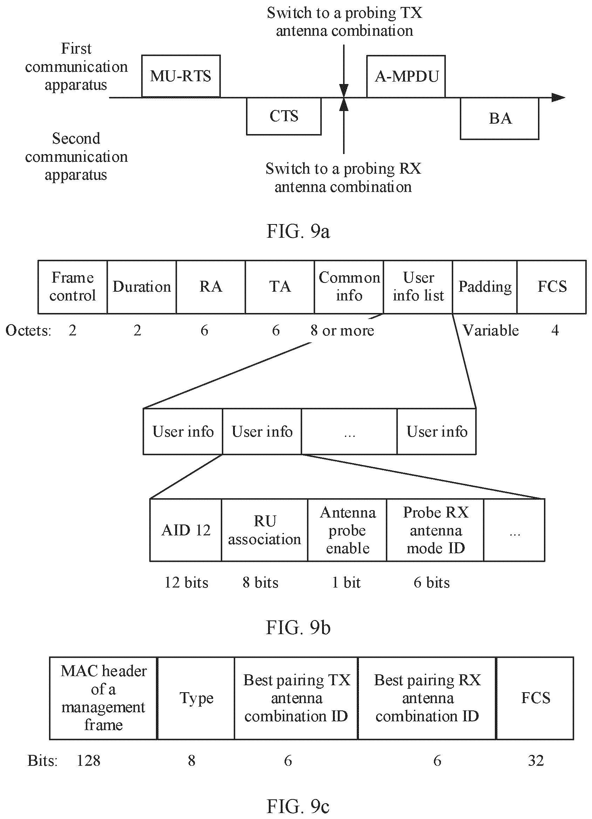

For example, as shown in FIG. 9a, the first communication apparatus may send an MU-RTS frame to the second communication apparatus, where the MU-RTS frame indicates a first receive antenna combination to which the second communication apparatus is to switch. After receiving the MU-RTS frame, the second communication apparatus sends a CTS frame. Correspondingly, the first communication apparatus receives the CTS frame, switches to a first transmit antenna combination corresponding to an antenna pairing result, and sends an A-MPDU based on the first transmit antenna combination. After receiving the A-MPDU, the second communication apparatus sends a BA frame of the A-MPDU. After receiving the BA frame, the first communication apparatus determines the pairing result between the first receive antenna combination and the first transmit antenna combination based on a packet error rate of the BA frame. After obtaining the pairing result, the first communication apparatus may determine best antenna mode pairing, and indicate the best antenna mode pairing to the second communication apparatus via a best antenna pairing announcement frame. In the supplementary probing, statistics on PERs may be collected by sending a service data A-MPDU packet, and a piece of antenna mode pairing with a smallest PER is selected for pairing. The first communication apparatus needs to send a special antenna probing MU-RTS frame (for a frame format, refer to FIG. 9b), to indicate a probe RX antenna mode to which the second communication apparatus needs to switch. Within SIFS time after the second communication apparatus replies with the CTS frame, the first communication apparatus switches to a probe TX antenna mode, and the second communication apparatus switches to the probe RX antenna mode to transmit the probe packet. After the second communication apparatus replies with the BA frame, the first communication apparatus collects statistics on probing PERs.

For example, in the top K pieces of best antenna pairing, the first communication apparatus may perform supplementary probing for a TX antenna mode ID and an RX antenna mode ID whose probability difference of u is within a specific value. As shown in Table 5, in the top K pieces of best antenna pairing, if probabilities of top' pieces of best antenna pairing are similar (for example, a probability difference is within 5%), supplementary probing is performed for the top K' pieces of best antenna pairing. In other words, the two communication parties may perform supplementary probing for antenna pairing corresponding to No. 1, No. 2, and No. 3 in Table 5.

Table 5

| Rank | <Best TX antenna mode ID, best RX antenna mode ID> | Best probability |
|---|---|---|
| No. 1 | <3, 4> | 85% |
| No. 2 | <2, 5> | 83% |
| No. 3 | <6, 1> | 82% |
| No. 4 | <4, 2> | 50% |

FIG. 9b is a diagram of a format of an MU-RTS frame according to an embodiment of this application. As shown in FIG. 9b, the MU-RTS frame may also be referred to as an antenna probing MU-RTS frame. Based on the MU-RTS frame defined in a protocol, first 7 bits in a 19-bit resv field in each user info field are used, and the following information is reused and carried: an antenna probe enable (antenna probe enable) field and a probe RX antenna mode ID (probe RX antenna mode ID) field. The antenna probe enable field may indicate that the MU-RTS frame may be used to perform antenna supplementary probing, and the probe RX antenna mode ID field may indicate the second communication apparatus to switch to the RX antenna mode indicated by the probe RX antenna mode ID field.

After collecting statistics on the PER, the first communication apparatus may determine the final best antenna mode pairing, and send the final best antenna mode pairing to the second communication apparatus via the best antenna pairing announcement frame. FIG. 9c is a diagram of a format of a best antenna pairing announcement according to an embodiment of this application. As shown in FIG. 9c, the best antenna pair announcement (best antenna pair announcement) frame is an action frame subtype in a management frame type. A MAC frame header of an 802.11 management frame may be defined in a protocol. A type field may be an action frame type field, and a value of the action frame type field may be any one of 21 to 125. For example, the frame may further include a (6-bit) best pairing TX antenna mode ID (best TX antenna mode ID) field and a best pairing RX antenna mode ID (best RX antenna mode ID) field.

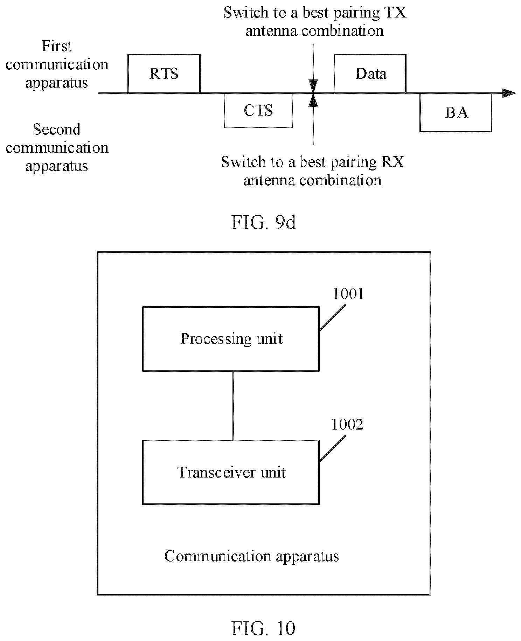

Therefore, after receiving the frame, a second communication apparatus may store the best pairing RX antenna mode ID, and subsequently, a first communication apparatus and the second communication apparatus perform data transmission through best antenna mode pairing. As shown in FIG. 9d, for example, the first communication apparatus may send an RTS frame, and the second communication apparatus replies with a CTS frame. In an SIFS interval, the first communication apparatus switches to a best pairing TX antenna mode, the second communication apparatus switches to a best pairing RX antenna mode, and data transmission is performed.

In embodiments shown in this application, a "field" is used as an example for illustration, and a "field" is not specifically distinguished from a "subfield" and the like. Although the "field" and the "subfield" are not specifically distinguished in embodiments shown in this application, a person skilled in the art may adaptively distinguish between a relationship between the fields (or elements and fields) shown in this application. Optionally, in actual application, the field, the element, and the like shown in embodiments of this application may also be represented in a form of information. Therefore, a representation form of content like the field, the subfield, the element, and the indication information is not limited in embodiments of this application. In the foregoing embodiments, for content that is not described in detail in one embodiment, refer to another embodiment. The foregoing embodiments may also be combined with each other. A specific combination manner is not described in detail again.

A sequence or a length of a field in each frame format shown in embodiments of this application is merely an example, and should not be construed as a limitation on embodiments of this application.

The following describes a communication apparatus provided in an embodiment of this application.

In this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software function module. It should be noted that, in this application, module division is an example, and is merely logical function division. During actual implementation, another division manner may be used. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a processing unit 1001 and a transceiver unit 1002. The transceiver unit 1002 may implement a corresponding communication function, and the processing unit 1001 is configured to process data. For example, the transceiver unit 1002 may also be referred to as a communication interface, a communication unit, or the like.

In some embodiments of this application, the communication apparatus may be configured to perform actions performed by the first communication apparatus in the foregoing method embodiments. In this case, the communication apparatus may be the first communication apparatus or a component (like a chip or a system) that may be configured in the first communication apparatus. The transceiver unit 1002 is configured to perform a receiving/sending-related operation of the first communication apparatus in the foregoing method embodiments, and the processing unit 1001 is configured to perform a processing-related operation of the first communication apparatus in the foregoing method embodiments. The communication apparatus may be configured to perform the steps or functions performed by the first communication apparatus in the foregoing method embodiments.

The transceiver unit 1002 is configured to send a measurement frame.

The transceiver unit 1002 is configured to receive a feedback frame of the measurement frame.

It may be understood that, that the transceiver unit 1002 is configured to send a measurement frame shown in this embodiment of this application may include: The transceiver unit 1002 may send the measurement frame to a second communication apparatus by using a transmit antenna combination, or output the measurement frame via the processing unit 1001. That the transceiver unit 1002 is configured to receive a feedback frame may include: The transceiver unit 1002 may receive the feedback frame from the second communication apparatus by using a receive antenna combination, or input the feedback frame to the processing unit 1001. Descriptions of the transceiver unit are also applicable in the following. Details are not described in detail in the following.

In a possible implementation, the transceiver unit 1002 is further configured to send a measurement announcement frame.

In a possible implementation, the transceiver unit 1002 is further configured to: send first capability information, and receive second capability information.

In a possible implementation, the transceiver unit 1002 is further configured to send a trigger frame.

In a possible implementation, the transceiver unit 1002 is further configured to: send an MU-RTS frame, and receive a CTS frame.

The processing unit 1001 is configured to: switch to a first transmit antenna combination corresponding to an antenna pairing result, and send an aggregated protocol data unit based on the first transmit antenna combination.

The transceiver unit 1002 is further configured to receive a block acknowledgment BA frame of the aggregated protocol data unit.

The processing unit 1001 is configured to determine the pairing result between a first receive antenna combination and the first transmit antenna combination based on a packet error rate of the BA frame.

In a possible implementation, the processing unit 1001 is further configured to communicate with the second communication apparatus based on the antenna pairing result that is fed back via the feedback frame and that corresponds to the second communication apparatus.

Optionally, the communication apparatus may further include a storage unit. The storage unit may be configured to store instructions and/or data. The processing unit 1001 may read the instructions and/or the data in the storage unit, so that the communication apparatus implements the foregoing method embodiments. For example, the storage unit may be configured to store at least one of the following: the antenna pairing result, a best antenna pairing mode ID, and the like.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein. The foregoing descriptions of the processing unit and the transceiver unit are merely examples. For descriptions of the foregoing terms, refer to the method embodiments. For example, for descriptions of the measurement frame, the feedback frame, the trigger frame, the measurement announcement frame, an NDP frame, a PPDU, and the like, refer to the foregoing method embodiments. Details are not described herein again.

FIG. 10 is reused. In some other embodiments of this application, the communication apparatus may be configured to perform actions performed by the second communication apparatus in the foregoing method embodiments. In this case, the communication apparatus may be the second communication apparatus or a component that may be configured in the second communication apparatus. The transceiver unit 1002 is configured to perform a receiving/sending-related operation of the second communication apparatus in the foregoing method embodiments, and the processing unit 1001 is configured to perform a processing-related operation of the second communication apparatus in the foregoing method embodiments. In other words, the communication apparatus may be configured to perform the steps or functions performed by the second communication apparatus in the foregoing method embodiments.

The transceiver unit 1002 is configured to: receive a measurement frame, and send a feedback frame of the measurement frame.

In a possible implementation, the transceiver unit 1002 is further configured to receive a measurement announcement frame.

In a possible implementation, the processing unit 1001 is configured to: determine a plurality of pieces of channel information based on a transmit antenna combination and a receive antenna combination that correspond to the measurement frame; determine target channel information in the plurality of pieces of channel information by using an artificial intelligence AI algorithm, and determine an antenna pairing result based on the target channel information, and generate the feedback frame based on the antenna pairing result.

In a possible implementation, the transceiver unit 1002 is further configured to receive a trigger frame.

In a possible implementation, the transceiver unit 1002 is further configured to receive an MU-RTS frame, and send a CTS frame.

The processing unit 1001 is configured to switch to a first receive antenna combination, and receive an aggregated protocol data unit based on the first receive antenna combination.

The transceiver unit 1002 is further configured to send a block acknowledgment BA frame of the aggregated protocol data unit.

In a possible implementation, the processing unit 1001 is further configured to communicate with the first communication apparatus based on the antenna pairing result that is fed back via the feedback frame and that corresponds to the first communication apparatus.

Optionally, the communication apparatus may further include a storage unit. The storage unit may be configured to store instructions and/or data. The processing unit 1001 may read the instructions and/or the data in the storage unit, so that the communication apparatus implements the foregoing method embodiments. For example, the storage unit may be configured to store at least one of the following: the antenna pairing result, a correspondence between a TX antenna mode ID and an RX antenna mode ID, the target channel information, a best probability, a best antenna pairing mode, and the like.

It may be understood that specific descriptions of the transceiver unit and the processing unit shown in this embodiment of this application are merely examples. For specific functions, steps, or the like of the transceiver unit and the processing unit, refer to the foregoing method embodiments. Details are not described herein. It may be understood that the foregoing descriptions of the processing unit and the transceiver unit are merely examples. For descriptions of the foregoing terms, refer to the method embodiments. For example, for descriptions of the measurement frame, the feedback frame, the trigger frame, the measurement announcement frame, an NDP frame, a PPDU, and the like, refer to the foregoing method embodiments. Details are not described herein again.

The foregoing describes the communication apparatus in embodiments of this application. The following describes possible product forms of the communication apparatus. It should be understood that a product in any form that has a function of the communication apparatus in FIG. 10 falls within the protection scope of embodiments of this application.

In a possible implementation, in the communication apparatus shown in FIG. 10, the processing unit 1001 may be one or more processors, and the transceiver unit 1002 may be a transceiver, or the transceiver unit 1002 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, and a connection manner between the processor and the transceiver is not limited in embodiments of this application. In a process of performing the foregoing method, a process of sending information in the foregoing method can be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method can be understood as a process of receiving the input information by the processor. When the processor receives the input information, the transceiver receives the foregoing information, and inputs the information to the processor. Further, after the transceiver receives the foregoing information, other processing may need to be performed on the information before the information is input to the processor.

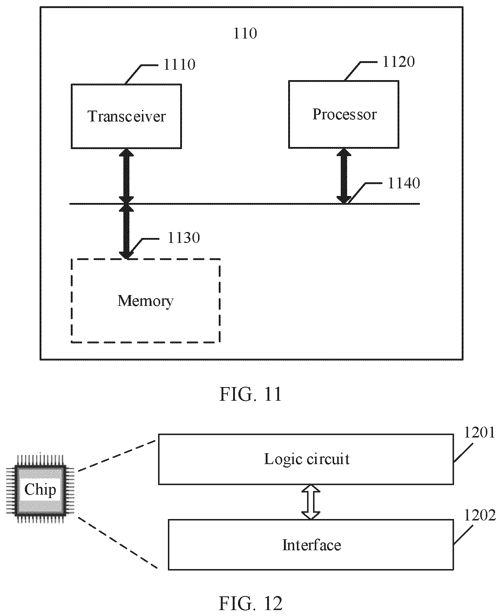

As shown in FIG. 11, a communication apparatus 110 includes one or more processors 1120 and a transceiver 1110.

For example, when the communication apparatus is configured to perform the step, method, or function performed by the first communication apparatus, the transceiver 1110 is configured to send a measurement frame. The transceiver 1110 is configured to receive a feedback frame of the measurement frame.

In a possible implementation, the transceiver 1110 is further configured to send a measurement announcement frame.

In a possible implementation, the transceiver 1110 is further configured to: send first capability information, and receive second capability information.

In a possible implementation, the transceiver 1110 is further configured to send a trigger frame.

In a possible implementation, the transceiver 1110 is further configured to: send an MU-RTS frame, and receive a CTS frame.

The processor 1120 is configured to: switch to a first transmit antenna combination corresponding to an antenna pairing result, and send an aggregated protocol data unit based on the first transmit antenna combination.

The transceiver 1110 is further configured to receive a block acknowledgment BA frame of the aggregated protocol data unit.

The processor 1120 is configured to determine the pairing result between a first receive antenna combination and the first transmit antenna combination based on a packet error rate of the BA frame.

In a possible implementation, the processor 1120 is further configured to communicate with the second communication apparatus based on the antenna pairing result that is fed back via the feedback frame and that corresponds to the second communication apparatus.

For example, when the communication apparatus is configured to perform the step, method, or function performed by the second communication apparatus, the transceiver 1110 is configured to receive a measurement frame, and send a feedback frame of the measurement frame.

In a possible implementation, the transceiver 1110 is further configured to receive a measurement announcement frame.

In a possible implementation, the processor 1120 is configured to: determine a plurality of pieces of channel information based on a transmit antenna combination and a receive antenna combination that correspond to the measurement frame; determine target channel information in the plurality of pieces of channel information by using an artificial intelligence AI algorithm, and determine an antenna pairing result based on the target channel information, and generate the feedback frame based on the antenna pairing result.

In a possible implementation, the transceiver 1110 is further configured to receive a trigger frame.

In a possible implementation, the transceiver 1110 is further configured to receive an MU-RTS frame, and send a CTS frame.

The processor 1120 is configured to switch to a first receive antenna combination, and receive an aggregated protocol data unit based on the first receive antenna combination.

The transceiver 1110 is further configured to send a block acknowledgment BA frame of the aggregated protocol data unit.

In a possible implementation, the processor 1120 is further configured to communicate with the first communication apparatus based on the antenna pairing result that is fed back via the feedback frame and that corresponds to the first communication apparatus.

It may be understood that for specific descriptions of the processor and the transceiver, refer to descriptions of the processing unit and the transceiver unit shown in FIG. 10. Details are not described herein again. For descriptions of the foregoing terms, refer to the method embodiments. For example, for descriptions of the measurement frame, the feedback frame, the trigger frame, the measurement announcement frame, an NDP frame, a PPDU, and the like, refer to the foregoing method embodiments. Details are not described herein again.

In various implementations of the communication apparatus shown in FIG. 11, the transceiver may include a receiver and a transmitter, the receiver is configured to perform a receiving function (or operation), and the transmitter is configured to perform a transmitting function (or operation). The transceiver is configured to communicate with another device/apparatus by using a transmission medium.

Optionally, the communication apparatus 110 may further include one or more memories 1130, configured to store program instructions, data, and/or the like. The memory 1130 is coupled to the processor 1120. The coupling in embodiments of this application may be indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. Optionally, at least one of the one or more memories may be included in the processor. Optionally, the one or more memories may be configured to store an antenna pairing result or the like in embodiments of this application.

A specific connection medium between the transceiver 1110, the processor 1120, and the memory 1130 is not limited in this embodiment of this application. In this embodiment of this application, the memory 1130, the processor 1120, and the transceiver 1110 are connected through a bus 1140 in FIG. 11. The bus is represented by using a thick line in FIG. 11. A manner of a connection between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

In this embodiment of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any other medium that can carry or store program code in a form of instructions or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

For example, the processor 1120 is mainly configured to: process a communication protocol and communication data, control the entire communication apparatus, execute a software program, and process data of the software program. The memory 1130 is mainly configured to store the software program and data. The transceiver 1110 may include a control circuit and an antenna. The control circuit is mainly configured to: perform conversion between a baseband signal and a radio frequency signal, and process the radio frequency signal. The antenna is mainly configured to send and receive a radio frequency signal in a form of an electromagnetic wave. An input/output apparatus, for example, a touchscreen, a display, a keyboard, or the like is mainly configured to: receive data input by a user, and output data to the user.

After the communication apparatus is powered on, the processor 1120 may read the software program in the memory 1130, interpret and execute instructions of the software program, and process data of the software program. When data needs to be sent in a wireless manner, the processor 1120 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1120. The processor 1120 converts the baseband signal into data and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 11, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 10, the processing unit 1001 may be one or more logic circuits, and the transceiver unit 1002 may be an input/output interface, or may be referred to as a communication interface, an interface circuit, an interface, or the like. Alternatively, the transceiver unit 1002 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus shown in FIG. 12 includes a logic circuit 1201 and an interface 1202. That is, the foregoing processing unit 1001 may be implemented by using the logic circuit 1201, and the transceiver unit 1002 may be implemented through the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes a logic circuit 1201 and an interface 1202.

In this embodiment of this application, the logic circuit and the interface may be further coupled to each other. A specific connection manner of the logical circuit and the interface is not limited in this embodiment of this application.

For example, when the communication apparatus is configured to perform the method, function, or step performed by the first communication apparatus, the interface 1202 is configured to: output a measurement frame, and input a feedback frame.

For example, the logic circuit 1201 is configured to determine the measurement frame. For example, the logic circuit 1201 is further configured to parse the input feedback frame to obtain an antenna pairing result.

In a possible implementation, the logic circuit 1201 is further configured to: output an association request frame in an vacant slot indicated by an vacant slot information field, and parse an association response frame input through the interface 1202.

In a possible implementation, the interface 1202 is further configured to output a measurement announcement frame.

In a possible implementation, the interface 1202 is further configured to output first capability information, and input second capability information.

In a possible implementation, the interface 1202 is further configured to output a trigger frame.

In a possible implementation, the interface 1202 is further configured to: output an MU-RTS frame, and input a CTS frame. The logic circuit 1201 is further configured to switch a transmit antenna combination in the first communication apparatus to a first transmit antenna combination. The interface 1202 is further configured to: output an aggregated protocol data unit, and input a BA frame. The logic circuit 1201 is further configured to determine a pairing result between a first receive antenna combination and the first transmit antenna combination based on the BA frame.

In a possible implementation, the logic circuit 1201 is further configured to communicate with a second communication apparatus based on the antenna pairing result.

For example, when the communication apparatus is configured to perform the method, function, or step performed by the second communication apparatus, the interface 1202 is configured to: input a measurement frame, and output a feedback frame.

For example, the logic circuit 1201 is further configured to parse the input measurement frame. For example, the logic circuit 1201 is further configured to determine the feedback frame.

In a possible implementation, the interface 1202 is further configured to input a measurement announcement frame.

In a possible implementation, the logic circuit 1201 is further configured to: determine a plurality of pieces of channel information based on a transmit antenna combination and a receive antenna combination that correspond to the measurement frame; determine target channel information in the plurality of pieces of channel information by using an AI algorithm, and determine an antenna pairing result based on the target channel information; and generate the feedback frame based on the antenna pairing result.

In a possible implementation, the interface 1202 is further configured to input a trigger frame.

For example, the logic circuit 1201 is further configured to parse the trigger frame.

In a possible implementation, the interface 1202 is further configured to: input an MU-RTS frame, and output a CTS frame. The logic circuit 1201 is further configured to: switch a receive antenna combination in the second communication apparatus to a first receive antenna combination, and output a BA frame based on a first received aggregated protocol data unit.

Optionally, the communication apparatus may further include a memory, and the memory may be configured to store the antenna pairing result.

For descriptions of the foregoing terms, refer to the method embodiments. For example, for descriptions of the measurement frame, the feedback frame, the trigger frame, the measurement announcement frame, an NDP frame, a PPDU, and the like, refer to the foregoing method embodiments. Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementation of embodiments shown in FIG. 12, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments. Alternatively, for the first communication apparatus and the second communication apparatus, refer to the communication apparatuses shown in FIG. 10 to FIG. 12.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are performed.

This application further provides a computer program product. The computer program product includes computer code or a computer program. When the computer code or the computer program is run on a computer, operations and/or processing performed by the second communication apparatus in the methods provided in this application are performed.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and is sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of a software product. The computer software product is stored in a readable-storage medium, and includes several instructions for instructing a computer device (which may be a personal computer, a server, or a network device) to perform all or some of the steps of the methods described in embodiments of this application. The foregoing readable-storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An antenna pairing method, wherein the method comprises:

    sending, by a first communication apparatus, a measurement frame, wherein a measurement element number in the measurement frame or a measurement frame number is determined based on information about a transmit antenna combination in the first communication apparatus and information about a receive antenna combination in a second communication apparatus; and
    receiving, by the first communication apparatus, a feedback frame of the measurement frame, wherein the feedback frame is used to feed back an antenna pairing result between the first communication apparatus and the second communication apparatus.

2.  The method according to claim 1, wherein the information about the transmit antenna combination comprises a transmit antenna combination number or index, and the information about the receive antenna combination comprises a receive antenna combination number or index.

3.  The method according to claim 1 or 2, wherein the measurement frame number or the measurement element number in the measurement frame is equal to a product of the transmit antenna combination number in the first communication apparatus and a largest receive antenna combination number in a plurality of second communication apparatuses.

4.  The method according to any one of claims 1 to 3, wherein the method further comprises:
    sending, by the first communication apparatus, a measurement announcement frame, wherein the measurement announcement frame comprises at least one of the following information:
    the transmit antenna combination number or index, the receive antenna combination number or index, and a paired antenna combination number in the antenna pairing result.

5.  The method according to claim 4, wherein the measurement announcement frame further comprises at least one piece of the following information:
    an identifier of the second communication apparatus that performs antenna measurement and a number of second communication apparatuses.

6. The method according to any one of claims 1 to 5, wherein

the measurement frame comprises a null data packet NDP frame, and the NDP frame comprises at least one of the following: information identifying that the NDP frame is used for antenna measurement, and a transmit antenna combination identifier corresponding to the NDP frame; or
the measurement frame comprises a physical layer protocol data unit PPDU, and a measurement element comprises a training field in the PPDU.

7. The method according to any one of claims 4 to 6, wherein the sending, by the first communication apparatus, a measurement announcement frame comprises:
sending the measurement announcement frame when the first communication apparatus supports an antenna pairing capability and the second communication apparatus supports an antenna pairing capability.

8. The method according to claim 7, wherein the method further comprises:

sending, by the first communication apparatus, first capability information, wherein the first capability information indicates the antenna pairing capability of the first communication apparatus, and the first capability information comprises at least one of the following: whether the first communication apparatus supports the antenna pairing capability, the transmit antenna combination number or index in the first communication apparatus, and time at which the first communication apparatus switches the transmit antenna combination; and
receiving, by the first communication apparatus, second capability information, wherein the second capability information indicates the antenna pairing capability of the second communication apparatus, and the second capability information comprises at least one of the following: whether the second communication apparatus supports the antenna pairing capability, the receive antenna combination number or index in the second communication apparatus, and time at which the second communication apparatus switches the receive antenna combination.

9. The method according to any one of claims 1 to 8, wherein before the receiving, by the first communication apparatus, a feedback frame of the measurement frame, the method further comprises:
sending, by the first communication apparatus, a trigger frame, wherein the trigger frame is used to trigger the second communication apparatus to send the feedback frame.

10. The method according to any one of claims 1 to 9, wherein after the receiving, by the first communication apparatus, a feedback frame of the measurement frame, the method further comprises:

sending, by the first communication apparatus, a multi-user request to send MU-RTS frame to the second communication apparatus, wherein the MU-RTS frame indicates a first receive antenna combination to which the second communication apparatus is to switch;
receiving a clear to send CTS frame, and switching, by the first communication apparatus, to a first transmit antenna combination corresponding to the antenna pairing result; and
sending an aggregated protocol data unit based on the first transmit antenna combination, receiving a block acknowledgment BA frame of the aggregated protocol data unit, and determining a pairing result between the first receive antenna combination and the first transmit antenna combination based on a packet error rate of the BA frame.

11. The method according to any one of claims 1 to 10, wherein the method further comprises:
communicating with the second communication apparatus based on the antenna pairing result that is fed back via the feedback frame and that corresponds to the second communication apparatus.

12. An antenna pairing method, wherein the method comprises:

receiving, by a second communication apparatus, a measurement frame, wherein a measurement element number in the measurement frame or a measurement frame number is determined based on information about a transmit antenna combination in a first communication apparatus and information about a receive antenna combination in the second communication apparatus; and
sending, by the second communication apparatus, a feedback frame of the measurement frame, wherein the feedback frame is used to feed back an antenna pairing result between the first communication apparatus and the second communication apparatus.

13. The method according to claim 12, wherein the information about the transmit antenna combination comprises a transmit antenna combination number or index, and the information about the receive antenna combination comprises a receive antenna combination number or index.

14. The method according to claim 12 or 13, wherein the measurement frame number or the measurement element number in the measurement frame is equal to a product of the transmit antenna combination number in the first communication apparatus and a largest receive antenna combination number in a plurality of second communication apparatuses.

15. The method according to any one of claims 12 to 14, wherein before the receiving, by a second communication apparatus, a measurement frame, the method further comprises:
receiving, by the second communication apparatus, a measurement announcement frame, wherein the measurement announcement frame comprises at least one of the following information:
the transmit antenna combination number or index, the receive antenna combination number or index, and a paired antenna combination number in the antenna pairing result.

16. The method according to claim 15, wherein the measurement announcement frame further comprises at least one piece of the following information:
an identifier of the second communication apparatus that performs antenna measurement and a number of second communication apparatuses.

17. The method according to claim 15 or 16, wherein the receiving, by a second communication apparatus, a measurement frame comprises:
sequentially switching, by the second communication apparatus, the receive antenna combinations based on the measurement announcement frame and a switching sequence, and receiving the measurement frame based on the switched receive antenna combinations.

18. The method according to claim 17, wherein information about the switching sequence is comprised in the measurement announcement frame; or the information about the switching sequence is defined by a standard.

19. The method according to any one of claims 12 to 18, wherein the measurement frame comprises a null data packet NDP frame, and the NDP frame comprises at least one of the following: information identifying that the NDP frame is used for antenna measurement, and a transmit antenna combination identifier corresponding to the NDP frame; or the measurement frame comprises a physical layer protocol data unit PPDU, and a measurement element comprises a training field in the PPDU.

20. The method according to any one of claims 12 to 19, wherein before the sending a feedback frame of the measurement frame, the method further comprises:

determining a plurality of pieces of channel information based on a transmit antenna combination and a receive antenna combination that correspond to the measurement frame;
determining target channel information in the plurality of pieces of channel information by using an artificial intelligence AI algorithm, and determining the antenna pairing result based on the target channel information, wherein an input of the AI algorithm comprises the plurality of pieces of channel information, and an output of the AI algorithm comprises the target channel information; and
generating the feedback frame based on the antenna pairing result.

21. The method according to any one of claims 12 to 20, wherein before the sending, by the second communication apparatus, a feedback frame of the measurement frame, the method further comprises:
receiving, by the second communication apparatus, a trigger frame, wherein the trigger frame is used to trigger the second communication apparatus to send the feedback frame.

22. The method according to any one of claims 12 to 21, wherein after the sending, by the second communication apparatus, a feedback frame of the measurement frame, the method further comprises:

receiving, by the second communication apparatus, a multi-user request to send MU-RTS frame, wherein the MU-RTS frame indicates a first receive antenna combination to which the second communication apparatus is to switch;

sending a clear to send CTS frame, and switching, by the second communication apparatus, to the first receive antenna combination; and

sending an aggregated protocol data unit based on the first receive antenna combination, and sending a block acknowledgment BA frame of the aggregated protocol data unit.

23. The method according to any one of claims 12 to 22, wherein the feedback frame comprises at least one piece of the following information:

a transmit antenna combination index in the antenna pairing result, a receive antenna combination index in the antenna pairing result, and a pairing probability of the antenna pairing result.

24. The method according to any one of claims 12 to 23, wherein the method further comprises:

communicating with the first communication apparatus based on the antenna pairing result that is fed back via the feedback frame and that corresponds to the first communication apparatus.

25. A communication apparatus, comprising a unit configured to perform the method according to any one of claims 1 to 24.

26. A communication apparatus, comprising a processor and a memory, wherein

the memory is configured to store instructions; and

the processor is configured to execute the instructions, to enable the method according to any one of claims to 1 to 24 to be performed.

27. A communication apparatus, comprising a logic circuit and an interface, wherein the logic circuit is coupled to the interface; and

the interface is configured to input and/or output code instructions, and the logic circuit is configured to execute the code instructions, to enable the method according to any one of claims 1 to 24 to be performed.

28. A computer-readable storage medium, wherein the computer-readable storage medium is configured to store a computer program, and when the computer program is executed, the method according to any one of claims 1 to 24 is performed.

29. A computer program, wherein when the computer program is executed, the method according to any one of claims 1 to 24 is performed.

30. A communication system, wherein the communication system comprises a first communication apparatus and a second communication apparatus, the first communication apparatus is configured to perform the method according to any one of claims 1 to 11, and the second communication apparatus is configured to perform the method according to any one of claims 12 to 24.

FIG. 1

FIG. 2

FIG. 3a

FIG. 3b

First communication apparatus        Second communication apparatus

FIG. 3c

First capability information   401

Second capability information   402

Measurement announcement frame   403

Measurement frame, where a measurement frame number or a measurement element number in the measurement frame may be determined based on information about a transmit antenna combination and information about a receive antenna combination   404

Trigger frame

Feedback frame of the measurement frame   405

FIG. 4

| Element ID (element ID) | Length (length) | Antenna pairing selection support (antenna pairing selection support) | TX antenna mode number (TX antenna mode number) | RX antenna mode number (RX antenna mode number) | Antenna mode switch time (antenna mode switch time) | Reserved (reserved) |
|---|---|---|---|---|---|---|
| Bits: 8 | 8 | 1 | 6 | 6 | 7 | 4 |

FIG. 5a

| MAC header of a control frame | Antenna measurement token | Measurement TX antenna mode number | Measurement RX antenna mode number | Target antenna mode number | Measurement STA number | STA_1 AID | ... | STA_n AID | FCS |
|---|---|---|---|---|---|---|---|---|---|
| Bits: 128 | 4 | 6 | 6 | 2 | 8 | 12 | | 12 | 32 |

FIG. 5b

35

| MAC header of a management frame | Type | Antenna measurement token | Best antenna pairing number | Best TX antenna mode ID (0) | Best RX antenna mode ID (0) | Best probability (0) | ... | Best TX antenna mode ID (k–1) | Best RX antenna mode ID (k–1) | Best probability (k–1) | FCS |
|---|---|---|---|---|---|---|---|---|---|---|---|
| Bits: 128 | 8 | 4 | 2 | 6 | 6 | 7 | | 6 | 6 | 7 | 32 |

FIG. 6a

EP 4 622 131 A1

Channel matrix H1

Channel matrix H2

Channel
quality AI
decision-
making
model

Relative channel
quality probability P
(H1, H2)

FIG. 6b

First
communication
apparatus

Trigger
frame

SIFS

Second
communication
apparatus

STA 1

STA 2

...

STA N

FIG. 6c

| Frame control | Duration | RA | TA | Common info | User info list | Padding | FCS |
|---|---|---|---|---|---|---|---|

Octets: 2    2    6    6    8 or more    Variable    Variable    4

| Trigger type | Other fields | Best antenna pairing number |
|---|---|---|

4 bits             2 bits

| User info | User info | ... | User info |
|---|---|---|---|

| AID 12 | Other fields |
|---|---|

12 bits

FIG. 6d

FIG. 7a

|  | 0th group | 1st group | (M_tx−1)th group |
|---|---|---|---|
|  | TX ant mode 0 | TX ant mode 1 | TX ant mode M_tx−1 |

Transmit end | Antenna pairing measurement announcement | NDP NDP ··· NDP | NDP NDP ··· NDP | ··· | NDP NDP ··· NDP

Receive end 1
M_rx(1)=M_rx
RX ant mode 0 | RX ant mode 1 | ··· | RX ant mode M_rx−1 | RX ant mode 0 | RX ant mode 1 | ··· | RX ant mode M_rx−1 | RX ant mode 0 | RX ant mode 1 | ··· | RX ant mode M_rx−1

Receive end 2
M_rx(2)=2
RX ant mode 0 | RX ant mode 1 | RX ant mode 0 | RX ant mode 1 | RX ant mode 0 | RX ant mode 1

FIG. 7b

| L-STF | L-LTF | L-SIG | RL-SIG | HE-SIG-A | HE-STF | HE-LTF | PE |
|-------|-------|-------|--------|----------|--------|--------|-----|
| 8 μs | 8 μs | 4 μs | 4 μs | 8 μs | 4 μs | 4 μs | 4 μs |

| Other fields | Antenna NDP flag | Transmit antenna mode ID | Other fields |
|--------------|------------------|--------------------------|--------------|
| | 1 bit | 6 bits | |

FIG. 7c

| L-STF | L-LTF | L-SIG | RL-SIG | U-SIG | EHT-SIG | EHT-STF | EHT-LTFs | PE |
|-------|-------|-------|--------|-------|---------|---------|----------|-----|
| 8 μs | 8 μs | 4 μs | 4 μs | 8 μs | 4 μs | 4 μs | | 8 μs |

| Other fields | Antenna NDP flag | Transmit antenna mode ID | Other fields |
|--------------|------------------|--------------------------|--------------|
| | 1 bit | 6 bits | |

FIG. 7d

FIG. 8a

EP 4 622 131 A1

FIG. 8b

| Preamble | | | | | Training field | | | Training field | | | | Training field | | |
|---|---|---|---|---|---|---|---|---|---|---|---|---|---|---|
| L-STF | L-LTF | L-SIG | RL-SIG | HE-SIG-A | HE-STF | HE-LTF | PE | HE-STF | HE-LTF | PE | ... | HE-STF | HE-LTF | PE |

FIG. 8c

FIG. 8d

Switch to a probing TX
antenna combination

First
communication
apparatus    | MU-RTS |                    | A-MPDU |

            | CTS |                          | BA |

Second
communication
apparatus

Switch to a probing RX
antenna combination

FIG. 9a

| Frame control | Duration | RA | TA | Common info | User info list | Padding | FCS |
|---|---|---|---|---|---|---|---|

Octets:    2         2      6    6    8 or more              Variable    4

| User info | User info | ... | User info |
|---|---|---|---|

| AID 12 | RU association | Antenna probe enable | Probe RX antenna mode ID | ... |
|---|---|---|---|---|

        12 bits    8 bits      1 bit        6 bits

FIG. 9b

| MAC header of a management frame | Type | Best pairing TX antenna combination ID | Best pairing RX antenna combination ID | FCS |
|---|---|---|---|---|

Bits:    128          8              6                        6                 32

FIG. 9c

Switch to a best pairing TX
antenna combination

First
communication
apparatus

RTS

Data

CTS

BA

Second
communication
apparatus

Switch to a best pairing RX
antenna combination

FIG. 9d

Processing unit                    1001

Transceiver unit                   1002

Communication apparatus

FIG. 10

110

1110

Transceiver

1120

Processor

1140

1130

Memory

FIG. 11

1201

Logic circuit

Chip

1202

Interface

FIG. 12

## INTERNATIONAL SEARCH REPORT

| International application No. |
| --- |
| **PCT/CN2023/138120** |

**A.     CLASSIFICATION OF SUBJECT MATTER**

H04B 7/06(2006.01)i

According to International Patent Classification (IPC) or to both national classification and IPC

**B.     FIELDS SEARCHED**

Minimum documentation searched (classification system followed by classification symbols)

IPC:H04B,H04W

Documentation searched other than minimum documentation to the extent that such documents are included in the fields searched

Electronic data base consulted during the international search (name of data base and, where practicable, search terms used)

CNTXT; ENTXT; DWPI; CNKI; 3GPP: 天线, 选择, 配对, 匹配, 探测, 测量, 帧, 包, 信标, 空数据分组, 空数据包, 物理层协议数据单元, 数量, 能力, 组合, 反馈, 最大, 乘积, antenna, selection, pair, detect, beacon, frame, NDP, PPDU, Null Data Packet, physical layer protocol data unit, number, combination, capability, feedback, maximum, product

**C.     DOCUMENTS CONSIDERED TO BE RELEVANT**

| Category* | Citation of document, with indication, where appropriate, of the relevant passages | Relevant to claim No. |
| --- | --- | --- |
| X | CN 114221682 A (HUAWEI TECHNOLOGIES CO., LTD.) 22 March 2022 (2022-03-22) description, paragraphs 171-225 and 430-468 | 1-30 |
| A | CN 108809381 A (MEDIATEK INC.) 13 November 2018 (2018-11-13) entire document | 1-30 |
| A | CN 113826331 A (CYPRESS SEMICONDUCTOR CORP.) 21 December 2021 (2021-12-21) entire document | 1-30 |
| A | US 11336487 B1 (HEWLETT PACKARD ENTERPRISE DEVELOPMENT LP) 17 May 2022 (2022-05-17) entire document | 1-30 |
| A | US 2019129024 A1 (QUALCOMM INC.) 02 May 2019 (2019-05-02) entire document | 1-30 |

| ☐ Further documents are listed in the continuation of Box C. | ☑ See patent family annex. |
| --- | --- |

\*     Special categories of cited documents:

"A"     document defining the general state of the art which is not considered to be of particular relevance

"D"     document cited by the applicant in the international application

"E"     earlier application or patent but published on or after the international filing date

"L"     document which may throw doubts on priority claim(s) or which is cited to establish the publication date of another citation or other special reason (as specified)

"O"     document referring to an oral disclosure, use, exhibition or other means

"P"     document published prior to the international filing date but later than the priority date claimed

"T"     later document published after the international filing date or priority date and not in conflict with the application but cited to understand the principle or theory underlying the invention

"X"     document of particular relevance; the claimed invention cannot be considered novel or cannot be considered to involve an inventive step when the document is taken alone

"Y"     document of particular relevance; the claimed invention cannot be considered to involve an inventive step when the document is combined with one or more other such documents, such combination being obvious to a person skilled in the art

"&"     document member of the same patent family

| Date of the actual completion of the international search | Date of mailing of the international search report |
| --- | --- |
| **22 February 2024** | **27 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138120**

| Patent document cited in search report | | | Publication date (day/month/year) | Patent family member(s) | | | Publication date (day/month/year) |
|---|---|---|---|---|---|---|---|
| CN | 114221682 | A | 22 March 2022 | WO | 2023078182 | A1 | 11 May 2023 |
| | | | | TW | 202322585 | A | 01 June 2023 |
| CN | 108809381 | A | 13 November 2018 | TW | 201840144 | A | 01 November 2018 |
| | | | | EP | 3240201 | A1 | 01 November 2017 |
| | | | | US | 2017317727 | A1 | 02 November 2017 |
| CN | 113826331 | A | 21 December 2021 | WO | 2020231907 | A1 | 19 November 2020 |
| | | | | US | 2020366324 | A1 | 19 November 2020 |
| | | | | DE | 112020002364 | T5 | 17 February 2022 |
| | | | | US | 2023055594 | A1 | 23 February 2023 |
| US | 11336487 | B1 | 17 May 2022 | DE | 102021127238 | A1 | 03 November 2022 |
| | | | | CN | 115278723 | A | 01 November 2022 |
| US | 2019129024 | A1 | 02 May 2019 | TW | 201924243 | A | 16 June 2019 |
| | | | | WO | 2019089760 | A1 | 09 May 2019 |

Form PCT/ISA/210 (patent family annex) (July 2022)

**REFERENCES CITED IN THE DESCRIPTION**

**Patent documents cited in the description**

- CN 202211694232